# EUROPEAN PATENT APPLICATION

(11) **EP 4 651 564 A1**
(43) Date of publication of application: **19.11.2025**
(21) Application number: 24176740.9
(22) Date of filing: 17.05.2024
(51) Int. Cl.: H04W 36/36, H04W 36/00

(54) **USER EQUIPMENTS AND BASE STATIONS PARTICIPATING IN A CONDITIONAL HANDOVER PROCEDURE**

(71) Applicant: Panasonic Intellectual Property Corporation of America, Torrance, CA 90504 (US)
(72) Inventor: DHANANJAYA, Harshith, 63225 Langen (DE); SUZUKI, Hidetoshi, Osaka, 571-8501 (JP); KUANG, Quan, 63225 Langen (DE)
(74) Representative: Grünecker Patent- und Rechtsanwälte PartG mbB

(57) **Abstract**

The present disclosure relates to a user equipment comprising the following. A receiver of the UE receives from a base station, an initial configuration for a conditional handover in a higher-layer message, wherein the initial conditional handover configuration identifies one or more candidate handover cells and one or more execution conditions for executing the conditional handover. Processing circuitry of the UE inactivates or activates evaluation of conditional handover execution conditions for candidate handover cells, in response to the received initial conditional handover configuration. The processing circuitry performs, for each activated evaluation, the evaluation of the one or more conditional handover execution conditions as to whether to perform the conditional handover towards one of the candidate handover cells. The receiver receives, from the base station, a conditional handover configuration update in a lower-layer message, wherein the conditional handover configuration update instructs the UE to update the conditional handover configuration.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, while they are different in that the URLLC service may preferably require ultra-low latencies.

A second objective is to achieve forward compatibility, which facilitates a completely new system design and/or the introduction of novel features.

### SUMMARY

One non-limiting and exemplary embodiment facilitates providing a user equipment to perform an improved conditional handover procedure.

In an embodiment, the techniques disclosed here feature a user equipment comprising the following. A receiver of the UE receives from a base station, an initial configuration for a conditional handover in a higher-layer message, wherein the initial conditional handover configuration identifies one or more candidate handover cells and one or more execution conditions for executing the conditional handover. Processing circuitry of the UE inactivates or activates evaluation of conditional handover execution conditions for candidate handover cells, in response to the received initial conditional handover configuration. The processing circuitry performs, for each activated evaluation, the evaluation of the one or more conditional handover execution conditions as to whether to perform the conditional handover towards one of the candidate handover cells. The receiver receives, from the base station, a conditional handover configuration update in a lower-layer message, wherein the conditional handover configuration update instructs the UE to update the conditional handover configuration.

Additional benefits and advantages of the disclosed embodiments and different implementations will be apparent from the specification and figures. The benefits and/or advantages may be individually obtained by the various embodiments and feature1s of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which the improved procedures of the present disclosure may be applied;
- **Fig. 2**: shows exemplary functional split options in 5G O-RAN,
- **Fig. 3**: illustrates a split architecture of a gNB,
- **Fig. 4**: is a signaling diagram for a handover involving a UE, a source gNB and a target gNB,
- **Fig. 5**: illustrates an exemplary conditional handover involving a UE, a source gNB and a target gNB,
- **Fig. 6 and 7**: illustrate the contention-based and contention-free RACH procedure;
- **Fig. 8**: illustrates a potential disadvantageous scenario for a conditional handover,
- **Fig. 9**: illustrates an improved conditional handover procedure according to a First Solution,
- **Fig. 10**: illustrates an exemplary and simplified structure of a communication device, such as UE, and a base station,
- **Fig. 11**: illustrates a structure of the communication device, such as the UE, according to an exemplary implementation of the improved conditional handover procedure according to a Second Solution,
- **Fig. 12**: illustrates a flow diagram for the UE behavior according to an exemplary implementation of the improved conditional handover procedure according to a Second Solution,
- **Fig. 13**: illustrates a structure of the communication device, such as the base station, according to an exemplary implementation of the improved conditional handover procedure according to a Second Solution,
- **Fig. 14**: illustrates a flow diagram for the base station behavior according to an exemplary implementation of the improved conditional handover procedure according to a Second Solution,
- **Fig. 15**: is a signaling diagram illustrating an exemplary exchange between the UE and the gNB for an exemplary implementation of the improved conditional handover procedure of the Second Solution,
- **Fig. 16**: is a signaling diagram illustrating an exemplary exchange between the UE and the gNB for an exemplary first detailed implementation of the improved conditional handover procedure of the Second Solution,
- **Fig. 17**: is a signaling diagram illustrating an exemplary exchange between the UE and the gNB for an exemplary second detailed implementation of the improved conditional handover procedure of the Second Solution,
- **Fig. 18**: is a signaling diagram illustrating an exemplary exchange between the UE and the gNB for an exemplary third detailed implementation of the improved conditional handover procedure of the Second Solution,
- **Fig. 19**: illustrates a structure of the communication device, such as the UE, according to an exemplary implementation of the improved conditional handover procedure according to a Third Solution,
- **Fig. 20**: illustrates a flow diagram for the UE behavior according to an exemplary implementation of the improved conditional handover procedure according to a Third Solution,
- **Fig. 21**: illustrates a structure of the communication device, such as the base station, according to an exemplary implementation of the improved conditional handover procedure according to a Third Solution,
- **Fig. 22**: illustrates a flow diagram for the base station behavior according to an exemplary implementation of the improved conditional handover procedure according to a Third Solution,
- **Fig. 23**: is a signaling diagram illustrating an exemplary exchange between the UE and the gNB for an exemplary implementation of the improved conditional handover procedure of the Third Solution,
- **Fig. 24**: is a signaling diagram illustrating an exemplary exchange between the UE and the gNB for an exemplary first detailed implementation of the improved conditional handover procedure of the Third Solution,
- **Fig. 25**: is a signaling diagram illustrating an exemplary exchange between the UE and the gNB for an exemplary second detailed implementation of the improved conditional handover procedure of the Third Solution, and
- **Fig. 26**: is a signaling diagram illustrating an exemplary exchange between the UE and the gNB for an exemplary implementation of the improved conditional handover procedure of the Fourth Solution,

### DETAILED DESCRIPTION

### 5G NR system architecture and protocol stacks

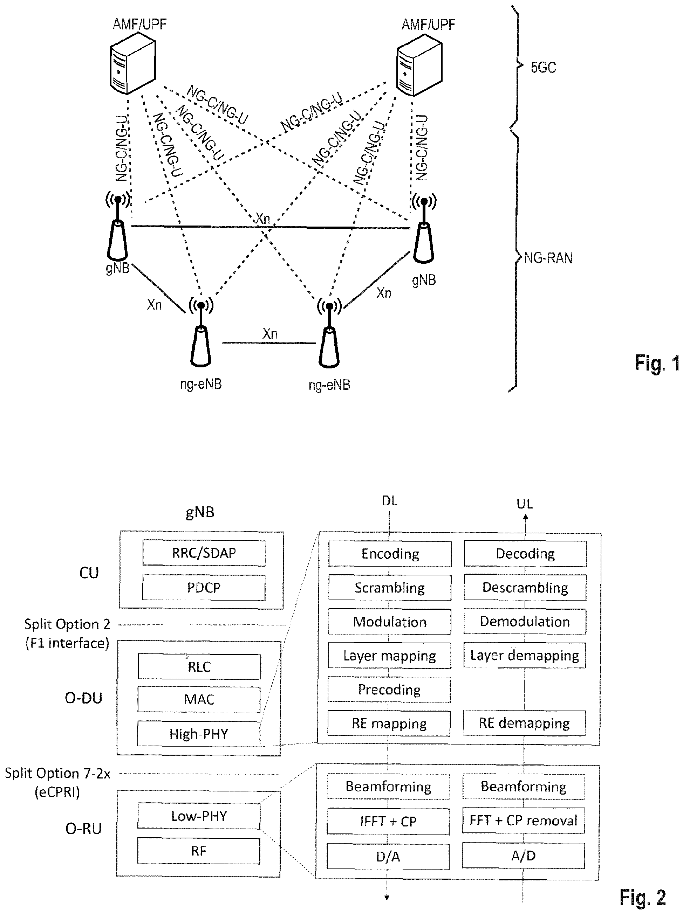

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v18.1.0, section 4).

### RRC connection setup and reconfiguration procedures

Interactions between a UE, gNB, and AMF (a 5GC entity) in the context of a transition of the UE from RRC_IDLE to RRC_CONNECTED for the NAS part are described (see 3GPP TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul, and the F1 interface is defined by the 3GPP. Further, the link between O-DU and O-RU is referred to as fronthaul and its functional split point may be Split Option 7-2x adopted as the O-RAN fronthaul specifications.

**FIG. 2** illustrates an example in which the base station functionality of the gNB is subjected to functional splitting into CU, O-DU, O-RU by Split Option 2 and Split Option 7-2x.

CU may include, for example, an RRC (radio resource control) function, an SDAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse First Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (First Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### Subband non-overlapping full duplex - SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD - Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### Split gNB architecture

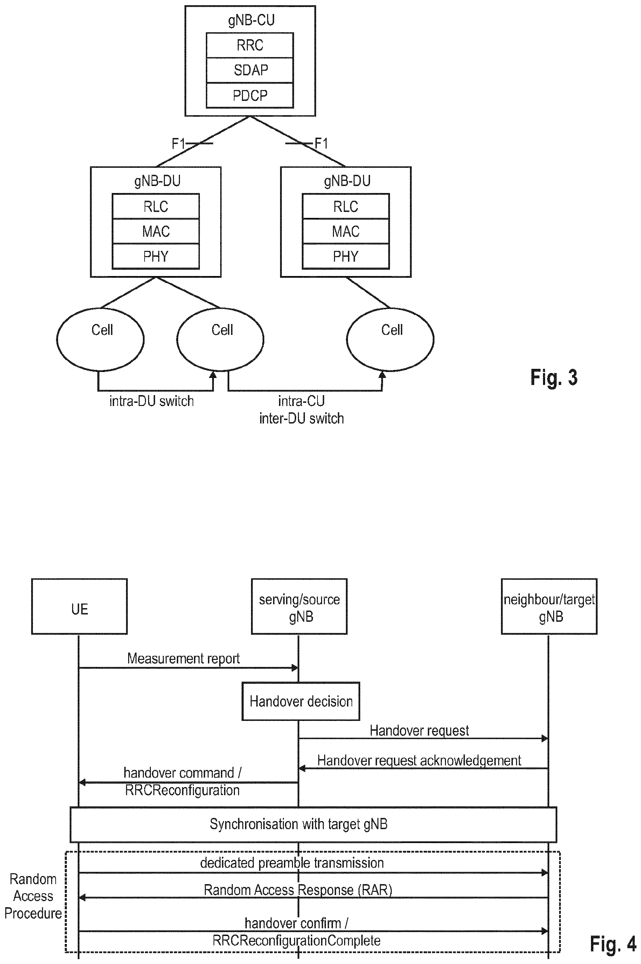

In the 3GPP standard, a gNB can be split into a gNB-CU (Central Unit) and one or more gNB-DUs (Distributed Units). This is illustrated in Fig. 3.

The gNB-CU is a logical node that provides support for the higher layers of the protocol stack such as SDAP, PDCP and RRC. On the other hand, the gNB-DU is a logical node that provides support for the lower layers of the protocol stack such as RLC, MAC and Physical layer. Also, note that SDAP layer will not be present if the CU is connected to a 4G Core network as the 5G core network would be available to support SOAP. Therefore, the PHY and MAC layers are terminated at the gNB-DU, while Layer 3 (RRC) is terminated at the gNB-CU.

In one example, there is a single CU for each gNB, i.e. one gNB-DU is connected to only one gNB-CU; alternatively, for resiliency, a gNB-DU may be connected to multiple gNB-CUs. One gNB-CU may control multiple gNB-DUs; for example more than 100 gNB-DUs can be connected to one gNB-CU. Each gNB-DU is able to support one or more cells, so one gNB can control hundreds of cells unlike the 4G BTS. One cell is supported by only one gNB-DU.

Also, note that the interface between CU and DU is named F1, and as per 3GPP, it should be an open interface. For NG-RAN, the NG and Xn-C interfaces for a gNB consisting of a gNB-CU and gNB-DUs, terminate in the gNB-CU. For EN-DC, the S1-U and X2-C interfaces for a gNB consisting of a gNB-CU and gNB-DUs, terminate in the gNB-CU. The gNB-CU and connected gNB-DUs are only visible to other gNBs and the 5GC as a gNB.

The gNB-CU/DU architecture is specified in more detail e.g. in 3GPP TS 38.401 v18.1.0, e.g. section 6.1. The F1 interface is specified in more detail e.g. in 3GPP TS 38.473 v18.1.0.

### Handover procedure

A typical and simplified handover is illustrated in **Fig. 4** and explained briefly in the following. A handover of a UE involves that a source base station makes the decision whether to hand over the UE from a source/serving gNB to a neighbour/target gNB (target radio cell). The decision is typically made by a source gNB, e.g., based on measurement results from the UE. The measurement results may be carried in one or more measurement reports, e.g., in the measurement report as illustrated in Fig. 4. Measurement reports are transmitted by the UE to assist the source cell with the handover procedure.

The handover is then prepared (preparation phase) between the two involved base stations, that is a source base station (herein may be interchangeably used with source gNB, source cell) and a target base station (herein may be interchangeably used with target gNB, target cell). The source gNB may transmit a handover request message to the target base station, which in turn may respond with a Handover request acknowledgement message so as to implement the preparation phase. Such a preparation phase allows a neighbour cell to decide whether it has the capacity to accept a further UE (e.g., acknowledging the handover) and reserving resources for the UE to be handed over.

Then, in the execution phase, the UE is instructed through a handover command message (e.g., an RRCReconfiguration message) to switch from the source cell to the target cell, which for example involves reconfiguration of the UE's radio resources so as to establish a connection with the target base station of the target radio cell. The UE accordingly performs the reconfiguration and attaches to the new target base station, which e.g. comprises a synchronization and performing a (e.g., contention-free) random access procedure. For instance, the synchronization may comprise that the UE acquires the synchronization signals (e.g., Primary Synchronization Signal, PSS, and Secondary Synchronization Signal, SSS) typically used to obtain the cell identity and frame timing of the target cell, thereby achieving time and frequency synchronization. The random access procedure is performed by the UE, e.g., in order to acquire the timing advance value and to obtain uplink resources for uplink transmission with the RAR message. For instance, it consists at least in transmitting the RACH preamble (e.g., a dedicated preamble, in line with what the preamble indicated in the handover command message for a contention-free RACH), the reception of the Random Access Response message (e.g., including an uplink grant), and finally as the third and last step of the random access procedure, the UE confirms that is has completed the reconfiguration and access to the target cell by transmitting a handover confirm message (RRCReconfigurationComplete message) to the target gNB. Alternatively, the RACH procedure could also be considered to be part of the Synchronization with the target gNB.

An exemplary implementation of such a handover procedure is defined for 5G NR for RRC Connected mobility in the 3GPP Technical Standard TS 38.300 v18.1.0, e.g. section 9.2.3.2.

The handover command message may include information of the target cell, such as the target cell ID and configuration information to be able to connect the target cell, as well as handover-accept and handover-reject conditions.

### Conditional Handover - CHO

In the legacy handover procedure presented above, the gNB is in charge of making the decision whether the handover should be performed or not. This handover procedure is a reactive process and prone to resulting in handover failures. For instance, it can happen that when the radio link becomes degraded and the mobile terminal needs to send measurement reports, the measurement reports never reach the network. Or, even if they do, the network tries to respond with a handover command that may never reach the mobile terminal, either because the downlink-is degraded and/or the handover command is so large that it requires multiple transmissions.

One important mobility enhancement specified by 3GPP as of Rel-16, named "Conditional Handover (CHO)*",* which is a handover procedure controlled by the network but initiated and executed by the UE when one or more handover execution conditions are satisfied. The CHO allows to reduce the number of failure occurrences while a user is moving, for example, when a handover between cells fails or when a connection fails even before a handover (HO) is triggered. CHO thus improves mobility robustness for the handover. Furthermore, it allows reducing signaling and reducing the handover delay. CHO can be used to change the PCell, either for a UE without Dual Connectivity or for a master cell group for a UE with Dual Connectivity. In DC (Dual Connectivity) a PCell change procedure can be performed to change the PCell of a Master Cell Group.

Because of the usefulness, CHO has been considered for many areas where cellular communication is applied, including e.g., Mobile Broadband (MBB), in Non-Terrestrial Networks (NTN), in Integrated Access Backhaul, and NR-Unlicensed.

In a conditional handover, the mobile terminal receives from the source gNB a handover command, (which is e.g., an RRCReconfiguration message) which contains conditional configuration information prepared by a potential target candidate cell). When received, the mobile terminal stores the configuration of the handover command, instead of applying it immediately as in the legacy handover. Together with the handover command, the mobile terminal also receives associated handover execution condition(s) to be monitored by the mobile terminal. The mobile terminal only applies the stored command when the handover execution condition(s) is(are) satisfied. Then, the mobile terminal executes the handover and connects to the target node as in a normal handover.

In one example, the source gNB can be responsible for preparing the conditional handover, including the handover execution conditions as to when the UE shall execute (i.e., trigger) the CHO. On the other hand, the candidate target gNB(s) provide the CHO configuration parameters to be forwarded by the source gNB to the mobile terminal.

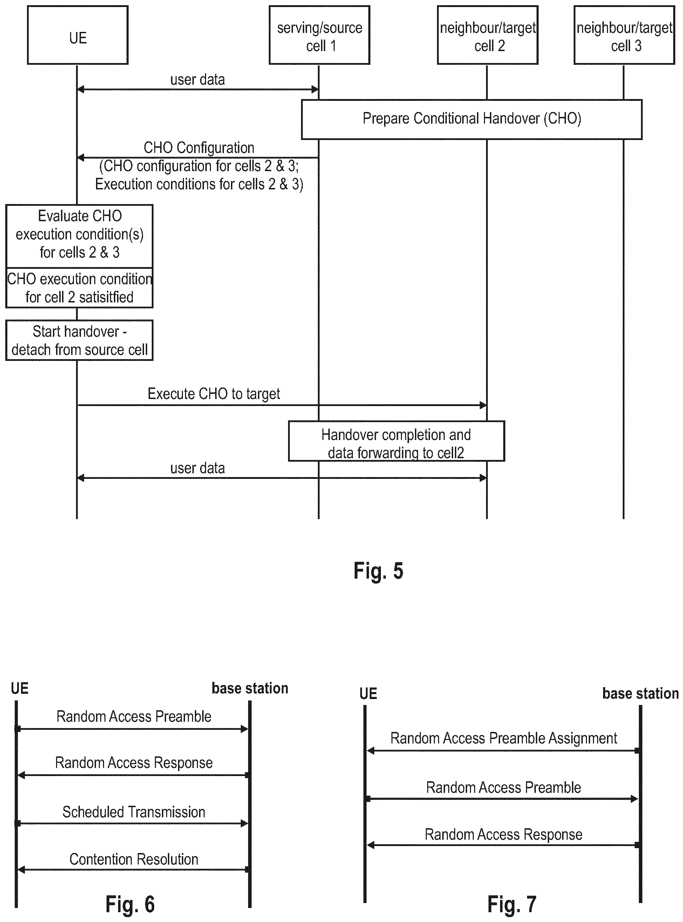

An exemplary and basic CHO procedure is illustrated by the signaling diagram of Fig. 5. As apparent, the source cell prepares the CHO with the target cells. The target cell gNB can provide the corresponding target-cell-specific configuration parameters to the source cell gNB. The source gNB sends a CHO command to the UE comprising the target cell configurations and execution conditions for the target cells. For instance, a CHO configuration may comprise candidate cell configurations along with corresponding execution conditions, which are sent to the UE by the source cell, earlier when the signal quality is still good. In one example, a CHO execution condition may comprise of one or more event trigger conditions, which the UE starts evaluating upon receiving the CHO configurations.

Upon reception of the CHO command, the UE does not immediately detach from the source cell (unlike in the legacy handover), but instead the UE continues exchanging UL and DL data with the source gNB, until the CHO execution condition is met. Once the execution condition for the target cell 2 is fulfilled, the UE initiates the CHO execution toward the target cell while detaching from the source cell (e.g., in the same or similar manner as in the legacy handover).

According to one example, the configuration parameters of the target gNB, can include one or more of the following:
- radio resource configuration of the candidate target cell, such as resource blocks, physical channel configuration,
- security configuration of the candidate target cell,
- dual connectivity information, such as master cell group information, secondary cell group information,
- measurement configuration of the candidate target cell,
- mobility information (including e.g., handover configuration and the conditional configuration.

The handover execution conditions are evaluated for instance based on measurements performed by the UE on one more candidate cells as defined by the network and configured to the UE during the configuration phase.

The CHO is more robust against failures, compared to the standard handover procedure, in which the handover is dependent on network-transmitted commands that are normally sent when the source gNB conditions are already degraded / deteriorated.

The above mentioned events for the CHO execution conditions specify certain triggering criteria, which are used by the UE for UE-initiated procedures, such as the Condition handover. The Event trigger conditions can be specific to measurement types, of which a few basic ones are Radio quality/quantity measurements, Distance-based measurements and Time-base measurements as detailed below:
- Radio quality/ quantity measurements:
   Events such as that a neighbour becomes an offset better than the current cell (SpCell) can be used for conditional handover (CHO) configurations at UE. The quality/ quantity measured units may refer to radio measurement parameters like RSRP, RSRQ, SINR etc.

In one example, such an event is EventA3, with the following conditions for entering and leaving:
∘ Entering condition [A3-1] :- (Mn + Ofn + Ocn - Hys) > (Mp + Ofp + Ocp + Off)
∘ Leaving condition [A3-2] :- *(Mn* + *Ofn* + *Ocn* + *Hys)* < *(Mp* + *Ofp* + *Ocp* + *Off)*

Event-A3 trigger condition depends on the measurement results from the neighbouring cells along with the serving cell, to be compared and estimated according to the entering and leaving conditions as configured for conditional handover at UE. Conditional handover is executed by UE upon detecting the entering condition for this event. Leaving condition helps UE to determine the execution condition being not fulfilled and hence conditional handover is not executed.

The entering and leaving conditions criteria are controlled by the network using the Of(n/p), Oc(n/p) and Hys parameters, to act upon the event trigger condition formulation computed and monitored by the UE.

Parameter definitions of the event condition formulation are as follows:
∘ Mn is the measurement result of the neighbouring cell, not taking into account any offsets.
∘ Ofn is the measurement object specific offset of the reference signal of the neighbour cell.
∘ Ocn is the cell specific offset of the neighbour cell and set to zero if not configured for the neighbour cell.
∘ Mp is the measurement result of the SpCell (or serving cell), not taking into account any offsets.
∘ Ofp is the measurement object specific offset of the SpCell (or serving cell).
∘ Ocp is the cell specific offset of the SpCell (or serving cell) and is set to zero if not configured for the SpCell.
∘ Hys is the hysteresis parameter for this event.
∘ Off is the offset parameter for this event.

The computation units of each parameter are as follows:
∘ Mn, Mp are expressed in dBm in case of RSRP, or in dB in case of RSRQ and RS-SINR.
∘ Ofn, Ocn, Ofp, Ocp, Hys, Off are expressed in dB.

Other Events defined for the Radio quality/quantity measurement type are Event A4 (Neighbour becomes better than threshold) and Event A5 (SpCell becomes worse than threshold1 and neighbour becomes better than threshold2). Details for these Events A4 and A5 are omitted here.
- Distance based measurements:
   Events such as that the distance between the UE and a referenceLocation1 is above thredhold1 and distance between UE and referenceLocation 2 is below threshold2 can be used for conditional handover (CHO) configurations at UE. The quality/ quantity measured units may refer to distance measurement information derived from parameters such as radio signal strength (e.g. RSRP, RSRQ, SINR etc.), signal traversal time (e.g. time of arrival, ToA, or time of departure, ToD, etc.) or signal traversal phase (e.g. angle of arrival, AoA, or angle of departure, AoD, etc.) Details for such an events are omitted here.
- Time based measurements:
   Events such as that the time measured at the UE is within a duration from threshold can be used for conditional handover (CHO) configurations at UE. The quality/ quantity measured units may refer to time/clock maintained at UE with reference to the epoch defined by UTC time or GNSS time ,etc. Details for such an events are omitted here.

Among the above provided different measurement types, at least the radio quality/quantity measurements can be lower-layer (e.g. Layer 1) measurements.

For the CHO, the network can determine the best set of cells for a handover during a candidate cell preparation phase, wherein the best set of cells can be selected by the network based on the measurement results reported by the UE. Put differently, the network performs an initial handover decision by defining candidate cells as potential targets of the CHO, while the UE gets to perform the final handover decision towards one of the initially-defined candidate cells according to its own evaluation (e.g. CHO execution conditions).

The measurements by the UE are performed on reference signals transmitted by the source cell and one or more neighbouring cells. The measurement performed on each of these cell could be used for evaluation of CHO candidate cells at the UE or reported to the source cell to be evaluated at the network for other features like L3/L1 handover decision (network triggered handover decisions). As an example, the reporting of measurement results by the UE to the source cell, can be performed based on different reporting types and at different reporting level, such as:
- Reporting types are listed below.
   ∘ Periodic reporting.
      ▪ Defining the periodicity for measurement reporting.
   ∘ Semi-persistent reporting.
      ▪ Network providing the start point after which the measurement reporting is sent periodically with a defined periodicity.
   ∘ Aperiodic reporting.
      ▪ Measurement reporting request is triggered by the network as required.
   ∘ Event triggered reporting.
      ▪ Measurement quality based events are configured at UE which defines the trigger interval for measurement reporting.
- Measurement reporting levels defined as in 5G-NR is listed below.
   ∘ Layer-3 measurement reporting.
      ▪ Measurement results are generated at layer-1.
      ▪ Layer-1 measurements are structured by RRC layer at UE and is transmitted as Measurement Report message in UL.
   ∘ Layer-1 measurement reporting.
      ▪ Measurement results are generated at layer-1.
      ▪ UE layer-1 transmits measurement results directly over PHY layer messages like PUCCH or PUSCH in UL.

### Random Access procedure

Similar to LTE, 5G NR provides a RACH (Random Access Channel) procedure (or simply random access procedure). For instance, the RACH procedure can be used by the UE to access a cell it has found. The RACH procedure can also be used in other contexts within NR, for example:
- For handover, when synchronization is to be established to a new cell;
- To reestablish uplink synchronization to the current cell, if synchronization has been lost due to a too long period without any uplink transmission from the device;
- To request uplink scheduling, if no dedicated scheduling request resource has been configured for the device.

There are numerous events that may trigger the UE to perform a random access procedure (see 3GPP TS 38.300, section 9.2.6), including the following. The random access procedure is triggered by a number of events:
- Initial access from RRC_IDLE; the UE uses the CBRA (Contention-based Random Access) procedure based on the SS/PBCH blocks.
- RRC Connection Re-establishment procedure; the UE uses the CBRA procedure based on the SS/PBCH blocks.
- Handover; this uses the contention based or CFRA (Contention-free Random Access) procedures, and it can be based on SS/PBCH blocks or CSI-RS.
- DL or UL data arrival during RRC_CONNECTED when UL synchronisation status is "non-synchronised";
   ∘ In case of UL data arrival with non-synchronized UL, the UE uses the CBRA procedure based on the SS/PBCH blocks.
   ∘ In case of DL data arrival with non-synchronized UL, the network uses a PDCCH order with contention based or CFRA procedure based on the SS/PBCH blocks.
- UL data arrival during RRC_CONNECTED when there are no PUCCH resources for SR available; the UE uses the CBRA procedure based on the SS/PBCH blocks.
- SR failure; the UE sends a scheduling request in response to UL data arrival but fails to receive an UL grant from the network. The UE uses the CBRA procedure based on the SS/PBCH blocks.
- Transition from RRC_INACTIVE to RRC_CONNECTED state; the UE uses the CBRA procedure based on the SS/PBCH blocks.
- To establish time alignment for a secondary TAG; the network uses a PDCCH order with CBRA procedure based on the SS/PBCH blocks.
- Request for Other SI (see clause 7.3); if the SI is contained in Msg1, the UE uses a dedicated preamble based on association with SS/PBCH block. If the SI is contained in Msg3, the UE uses the CBRA procedure based on the SS/PBCH blocks.
- Beam failure recovery; the UE uses the contention based or CFRA procedure based on SS/PBCH blocks or CSI-RS association.

A mobile terminal can be scheduled for uplink transmission if its uplink transmission is time synchronized. Therefore, the Random Access Channel (RACH) procedure plays a role as an interface between non-synchronized mobile terminals (UEs) and the orthogonal transmission of the uplink radio access. For instance, the Random Access is used to achieve uplink time synchronization for a user equipment, which either has not yet acquired, or has lost, its uplink synchronization. Once a user equipment has achieved uplink synchronization, the base station can schedule uplink transmission resources for it. One scenario relevant for random access is where a user equipment in RRC_CONNECTED state, handing over from its current serving cell to a new target cell, performs the Random Access Procedure in order to achieve uplink time-synchronization in the target cell.

The PRACH consists of a preamble format made up of one or more preamble sequences transmitted in a time-frequency resource. The UE transmits the PRACH preamble in a PRACH occasion (RO) which is a time-frequency resource that the network allocates for preamble transmission.

There can be at least two types of random access procedures, contention based random access (CBRA) procedure, and contention free random access (CFRA) procedure. In the CBRA procedure, multiple users randomly select a preamble from a pool of preambles, and a contention resolution phase determines which user, if any, had its data successfully received by the network. Contention resolution resolves contention between two or more users selecting the same preamble. In the CFRA procedure, a preamble is uniquely pre-allocated to the user, hence there is no possibility of preamble collision between users and no need for contention resolution. An exemplary definition of a random access procedure can be found in 3GPP TS 38.321, v18.1.0 section 5.1.

The RACH procedure will be described in the following in more detail, with reference to Fig. 6 and Fig. 7. In the following, the contention-based random access procedure is being described in more detail with respect to Fig. 6. This procedure consists of four "steps" and thus can be termed for example as a 4-step RACH procedure.

First, the user equipment transmits a random access preamble on the Physical Random Access Channel (PRACH) to the base station (i.e. message 1 of the RACH procedure). When the UE transmits the preamble to the gNB, it conveys the selected SS/PBCH block index to the gNB. The network configures the association between the SS/PBCH Block indices and the PRACH occasions and preamble indices by broadcast signaling.

In the second step, the gNB acknowledges the reception of the preamble by sending a random access response (RAR) on a PDSCH channel. The RAR is scheduled by a Downlink Control Information (DCI) with a CRC scrambled by the Random Access Radio Network Temporary Identifier (RA-RNTI) on the corresponding PDCCH. The PDCCH of the RAR is transmitted in Type1-PDCCH Common Search Space (CSS). The RA-RNTI is a function of the time and frequency of the PRACH occasion the preamble is detected (see 38.321).

The UE attempts to receive the RAR during the RAR window. The RAR window starts at the first symbol of the earliest CORESET (control resource set) of Type1-PDCCH CSS that starts at least one symbol after the PRACH occasion corresponding to the PRACH transmission. The RAR window size is configured in number of slots and is less than 10 ms. In case of CBRA, the DMRS port of the PDSCH channel carrying the RAR and the DMRS port of the corresponding PDCCH channel are quasi-co-located with the reference signal used for association and transmission of the corresponding preamble.

At the start of the random access procedure, the UE sets the PREAMBLE_TRANSMISSION_COUNTER to 1. If the UE doesn't receive the RAR during the RAR window with a RAPID (random access preamble identity) that matches the transmitted preamble, it increments the PREAMBLE_TRANSMISSION_COUNTER by 1 and retransmits the PRACH preamble after a back off period. After several PRACH preamble retransmissions attempts, when the PREAMBLE_TRANSMISSION_COUNTER exceeds higher layer parameter *preambleTransMax*, without receiving a RAR with a RAPID that matches the transmitted preamble, the Random Access Channel (RACH) procedure fails.

When the UE successfully decodes a RAR with a RAPID that matches the transmitted preamble and that includes a MAC RAR, the UE performs the following:
- It processes the received TA command.
- It processes the UL grant in the MAC RAR, and in response transmits a PUSCH (a.k.a. Msg3).

In the third step of the CBRA procedure, the UE transmits Msg3 on the Uplink Shared Channel (UL-SCH) on a PUSCH in response to the uplink grant of the RAR. Msg3 contains C-RNTI MAC CE if the UE triggering the CBRA procedure is in CONNECTED Mode with a C-RNTI, or it contains the CCCH SDU with the Contention Resolution Identity MAC CE. The trigger of the random access procedure, determines the content of Msg3. For example:
- During initial access, Msg3 contains RRCSetupRequest.
- During Radio Resource Control (RRC) re-establishment, Msg3 contains RRCReestablishmentRequest.
- To transition from the RRC_INACTIVE state to the RRC_CONNECTED state, Msg3 contains RRCResumeRequest or RRCResumeRequest1.
- To get system information, Msg3 contains RRCSystemlnfoRequest.
- During contention-based BFR Msg3 contains C-RNTI MAC CE.

After the UE transmits Msg3 it starts the ra-ContentionResolutionTimer and monitors the PDCCH channel. The UE can receive a PDCCH with a CRC scrambled by the TC-RNTI requesting a retransmission of Msg3, if the gNB didn't successful decode Msg3. When the UE retransmits Msg3, it restarts the ra-ContentionResolutionTimer after the Msg3 retransmission.

In the fourth step of the CBRA procedure, the gNB transmits a message to the UE.
- If Msg3 contained the C-RNTI MAC CE, the gNB transmits a PDCCH with CRC scrambled by the C-RNTI. Upon reception of this PDCCH, the UE stops ra-ContentionResolutionTimer and considers the CBRA procedure successful.
- If Msg3 contained the CCCH SDU, the gNB transmits a PDCCH scheduling a PDSCH with CRC scrambled by the TC-RNTI, indicated to the UE in the RAR. The corresponding PDSCH echoes back the contention resolution identity received in Msg3. Upon reception of the PDCCH scheduling a PDSCH and with CRC scrambled by the TC-RNTI, the UE decodes the corresponding PDSCH. If the contention resolution identity received in the PDSCH matches that transmitted in Msg3, the UE stops ra-ContentionResolutionTimer and considers the CBRA procedure successful and sends uplink Hybrid Automatic Repeat Request (HARQ) acknowledgement to the gNB to stop any further retransmissions of this message.

∘ Else when the contention resolution identity received in the PDSCH doesn't match that transmitted in Msg3, the UE stops ra-ContentionResolutionTimer and considers the Contention Resolution unsuccessful.

If the ra-ContentionResolutionTimer expires before the UE successfully receives the downlink message transmitted by the gNB, the UE considers Contention Resolution unsuccessful. If Contention Resolution is unsuccessful, the UE increments the PREAMBLE_TRANSMISSION_COUNTER by 1 and restarts the random access procedure, with preamble selection, after a back off period. After several PRACH preamble retransmissions attempts, when the PREAMBLE_TRANSMISSION_COUNTER exceeds higher layer parameter preambleTransMax, without successful completing the random access procedure, the RACH procedure fails.

Fig. 7 is illustrating the contention-free random access procedure, which is simplified in comparison to the contention-based random access procedure. The base station provides in a first step the user equipment with the dedicated preamble to use for random access so that there is no risk of collisions, i.e. multiple user equipments transmitting the same preamble. Accordingly, the user equipment subsequently sends the preamble that was signaled by the base station in the uplink on a PRACH resource. Since the case that multiple UEs are sending the same preamble is avoided for a contention-free random access, essentially, a contention-free random access procedure is finished after having successfully received the random access response by the UE.

In more detail, the UE-dedicated preamble assignment determines:
- The preamble index.
- The mask index to determine the PRACH Occasion(s) to use for preamble transmission within the set of PRACH occasions associated with the SS/PBCH Block or the channel-state information reference signals (CSI-RS) used for preamble transmission. The UE transmits on a preassigned preamble index and PRACH occasion(s) associated with a reference signal (SS/PBCH block or CSI-RS) that exceeds a higher layer configured threshold rsrp-ThresholdSSB or rsrp-ThresholdCSI-RS.

As the preamble is preassigned by the network, there is no contention resolution phase. As the preamble is dedicated, it also identifies the UE to gNB. The random access procedure is considered successful after reception of a RAR with a RAPID that matches the transmitted preamble.

3GPP also defines a 2-step (contention-based) RACH procedure for 5G NR, where a message 1 (termed as MsgA), that corresponds to messages 1 and 3 in the four-step LTE/NR RACH procedure, is transmitted at first. The MsgA of the 2-step RACH type includes a preamble on the Physical Random Access Channel (PRACH) and a payload on the Physical Uplink Shared Channel (PUSCH). After MsgA transmission, the UE monitors for a response from the gNB within a configured time window. Then, the gNB will respond with a message 2 (termed as MsgB), corresponding to messages 2 and 4 of the 4-step LTE/NR RACH procedure. This MsgB can include e.g. a Success random access response (RAR), a Fallback RAR, and optionally a backoff indication. If contention resolution is successful upon receiving the Success RAR, the UE ends the random access procedure; while if Fallback RAR is received in MsgB, the UE performs message 3 transmission (as in 4-step RACH procedure) and monitors contention resolution. Some further exemplary assumptions are made for the 2-step RACH procedure, such as that the UE, after deciding on the RACH type (e.g. the 2-step RACH), keeps retrying that same RACH type until failure. But there may be also the possibility that the UE can switch to the 4-step RACH procedure after certain reattempts of transmitting MsgA.

Both CBRA and CFRA procedures are possible in 2-step RA type too.

### Conditional Handover and Split gNB architecture

The CHO support together with the candidate measurement reporting support may allow to make the handover execution more robust against dynamic channel variations and the network conditions.

However, the inventors have also identified disadvantages as will be explained in the following.

In the split gNB architecture, the gNB-CU can be responsible for determining the CHO configurations and also for updating same. Determining and updating CHO configurations, e.g. selecting the candidate cells for the CHO, depends not only on the measurement results reported from the UE but also on the dynamic network conditions. A selection of the CHO candidate cells may benefit from considering the complete information, e.g. the radio conditions measured at the UE and the network conditions at the network side. For example, a cell might have less load (good network condition) but with a bad radio quality measured at the UE, in which case this cell may not always serve as a candidate cell for the handover.

There is a higher risk of handover failures that can result from the delayed transmissions of updated CHO configurations from the gNB-CU, e.g. when the decisions on the CHO configurations are dependent on the measurement results of the channel reported by the UE.

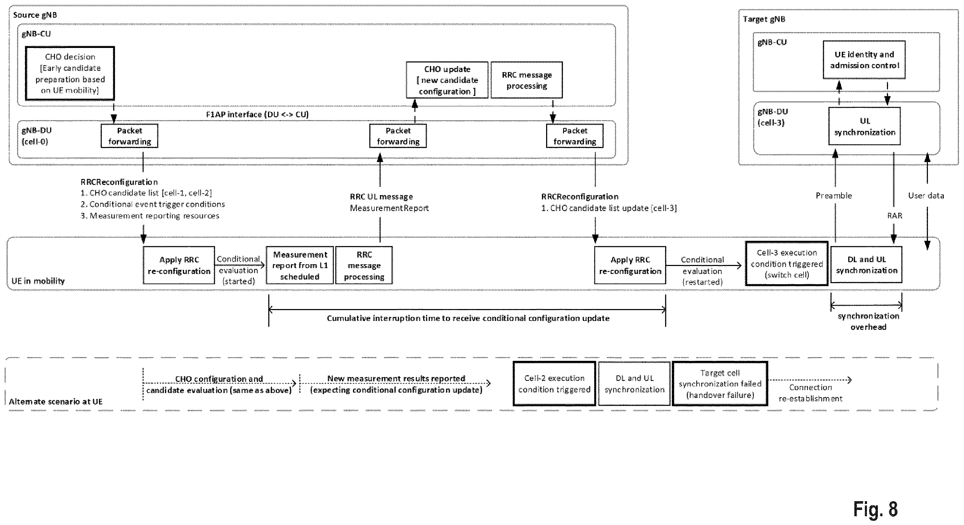

Such a potential disadvantageous scenario is illustrated in Fig. 8, which illustrates in a simplified and exemplary form different processes performed at the source gNB (CU and DU), the target gNB (CU and DU) and the UE participating in a CHO. Fig. 8 exemplarily illustrates the processes of generating and applying the RRC ReConfiguration for the CHO configurations (e.g. CHO candidate list, CHO execution conditions, and measurement reporting). It further illustrates the measurement reporting by the UE to the source gNB-CU (via source gNB-DU), which is exemplarily assumed to result in an update of the CHO configuration by including target cell 3 for the CHO and no longer including target cells 1 and 2 (e.g. due to bad radio conditions and/or bad network conditions). The upper UE processing box illustrates a scenario in which the CHO is performed successfully to the target cell 3, after the CHO configuration update. On the other hand, Fig. 8 also illustrates in the lower UE processing box an alternate scenario at the UE, according to which the UE, before receiving the updated CHO configuration, executes a CHO towards target cell 2, which however may result in reduced overall handover performance either due to loss of transmitted packets (for example the first UL data from UE) sent to the target cell and having to trigger connection re-establishment for cell recovery, or higher cell capacity at the target cell to provide good service to the newly arriving UE as expected (here the network may have to trigger another handover procedure to a different cell in order to provide the expected services to the UE). Any of these failure scenarios causes prolongation of services resumed at UE once detached from the source cell for handover.

Accordingly, the possibility that the UE switches between cells using CHO execution conditions that are provided at an early stage by the source cell can prove disadvantageous, particularly in a scenario where the network conditions are changing dynamically. The UE may be able to evaluate the channel conditions at its side, but is not aware of changes in the network conditions, such as network congestions resulting from many new established connections at a candidate cell.

Further, the gNB-CU needs to transmit a separate message for any detected CHO configuration updates at the network, wherein this separate message would convey the update, e.g. an update candidate list and/or a change in the CHO execution conditions. For instance, the candidate list could be changed, such that less preferred cells could be terminated for the conditional event evaluations (e.g. cells 1 and 2 in Fig. 8). Further, for example, the CHO execution conditions could be changed such that less preferred cells may still be available for evaluation but made relatively lower-prioritized compared to other candidate cells (e.g. by modifying the offset values used for an execution condition of said candidate cell, e.g. an entering condition). As exemplified in Fig. 8, the handling of the CHO configuration updates by the gNB-CU may be inefficient, because it may result in delays before the CHO configuration updates are received and processed at the UE.

In one example, the cumulative interruption time for the gNB-CU sending the CHO configuration update to the UE involves:
- RRC message processing delays observed in DL or UL.
   ∘ Measurement reports sent over RRC message (layer 3) in UL.
   ∘ CHO configurations updates sent over RRCReconfiguration message (layer 3) in DL.
- Packet forwarding of RRC messages from gNB-CU (upper layers) to gNB-DU (lower layers).
   ∘ F1AP interface delay in case of split gNB architecture.
   ∘ RLC and MAC layer processing time applied to all RRC layer messages with any gNB architecture (either split or non-split gNB), before it could be transmitted/ received at the radio channel in DL/ UL respectively. And a similar delay applies to UE side between RRC layer and physical radio.
      ▪ RRC is implemented at the gNB-CU side for the split gNB architecture.
      ▪ This document applies to non-split architecture as well, where the description of gNB-CU substitutes to referring all the upper layers of gNB (with RRC, PDCP and SDAP) and gNB-DU substitutes to referring all the lower layer of the gNB (with RLC, MAC and PHY).

### Conditional Handover and Random Access

As presented above, the handover procedure may comprise a synchronization and RACH procedure when attaching to the new target cell. Accordingly, when one of the CHO execution conditions is satisfied at the UE, the UE may start the CHO execution, including a synchronization procedure (e.g. using the RACH procedure) with the target cell.

In one exemplary implementation, the RACH procedure during handover may involve DL synchronization using SSB reference signal of the target cell and UL synchronization using preamble transmission to obtain the timing advance (TA) value, to transmit the first UL data towards the target cell.

A RACH-less UE entry during handover towards the target cell is possible by shifting the DL and UL synchronization to an earlier point in item (before an execution condition is satisfied) such that the TA (Timing Advance) value is available for the first UL data sent towards the target cell. Once the early RACH procedure is successful, the target gNB (or target cell) reserves UL resources for the first UL data expected from the UE. Since the synchronization is shifted earlier, the synchronization overhead during the handover procedure is reduced.

A RACH-less execution, i.e. attaching to the new target cell without the UE and target cell performing a RACH procedure after the handover process has been initiated by the UE towards the target cell, is not supported in the legacy CHO procedure. Consequently, synchronizing to the new target cell using the RACH procedure increases the overall handover latency during mobility.

### Further Improvements

The inventors thus identifies the possibility to define improved conditional handover procedures and parts thereof, which facilitates avoiding one or more of the above described disadvantages. The present invention relates to different solutions and variants for such an improved conditional handover procedure.

Following from the above, the inventors have realized that an RRC configuration for the CHO configurations is not always sufficient to make better handover decisions on the radio conditions alone. For instance, since the dynamic network conditions are available at the gNB but not at the UE. Without providing updated CHO configurations, the UE could thus possibly trigger a handover towards a candidate cell with a greater network congestion, which might result in a handover failure or, in case the handover succeeds, in a poorer network service. On the other hand, updating the CHO configurations using the higher layer at the gNB-CU (according to current prior art legacy procedures) may result in larger interruption duration, e.g. due to a high processing time of measurement reporting and CHO configuration updates handled by the higher layer, which must be forwarded inevitably through the lower layers that reside at the gNB-DU.

Moreover, 3GPP has a work item on further enhancements in Release 19 mobility, addressing conditional LTM (Lower-Layer Triggered Mobility), which may focus on specifying UE-evaluated conditions for triggering LTM, on supporting conditional LTM including subsequent LTM, and on prioritizing intra-CU LTM.

Relating to another problem, there is a synchronization overhead involved in the normal CHO procedures, which further delays the provision of services resumed for the UE at the new target cell. The synchronization overhead partly results from requiring the use of RACH-based (conditional) handover execution. Implementing a RACH-less (conditional) handover execution, however, would involve the disadvantage that all the conditional candidate cells (e.g. within the CHO configurations) need to reserve uplink resources for the UE to transmit its first uplink data after/during the handover. This would result in an inefficient utilization of radio resources.

### First Solution

In the following an improved conditional handover procedure according to the First Solution will be presented so as to overcome one or more of the above identified disadvantages of the prior art.

According to the First Solution, the gNB-CU could configure Layer-1 (L1) measurement reporting at the UE side instead of Layer-3 (L3) measurement reporting, together with a legacy (conditional) handover procedure. This would facilitate reducing the interruption time, by avoiding the L3 measurement reporting sent by the UE over the RRC messages. Accordingly, the conditional configuration updates sent to the UE can occur comparatively quicker, and the overall interruption time is reduced.

In more detail, upon detecting any changes (e.g. in the network conditions) or after evaluating the L1 measurement results obtained in the measurement reports, the gNB-CU can use any existing conditional configuration for a target cell and transmit the configuration into a handover command message to the UE for immediate handover execution (e.g. not a conditional HO). Put differently, the existing conditional configuration of a target cell is converted into a handover command. This allows that the decision at the UE on conditional handover execution conditions is avoided and that the UE switches to an appropriate cell as intended by the network.

For sake of completion, if the UE receives a handover command from the network to be executed immediately while at the same time being configured to evaluate conditional handover(s) to CHO candidate cells, then, the received handover command is given a higher priority than the CHO. Thus, the direct handover command will be executed by the UE.

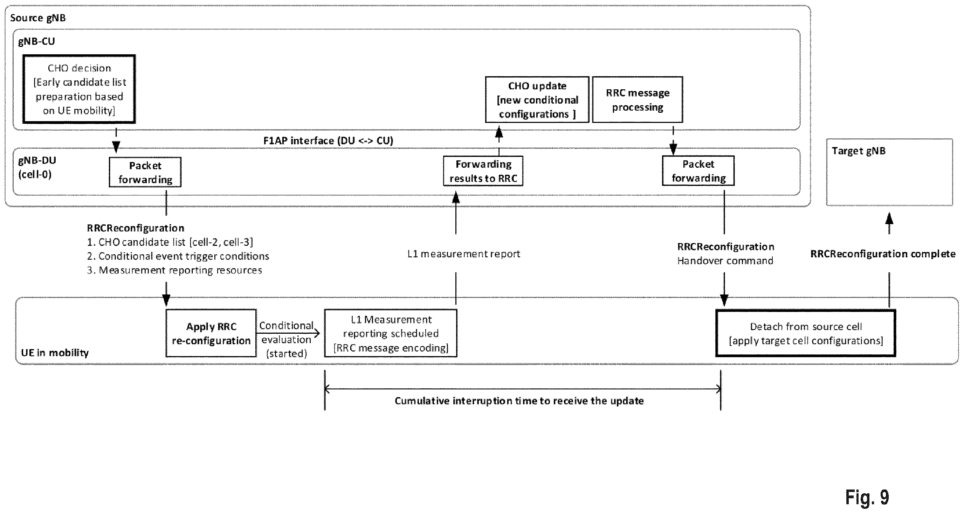

An exemplary implementation of this First Solution is illustrated in Fig. 9, which illustrates in a simplified and exemplary form different processes performed at the source gNB (CU and DU), the target gNB (CU and DU) and the UE participating in an improved CHO according to this First Solution. Fig. 9 is similar to Fig. 8, but illustrates the direct L1 Measurements provided from the UE to the gNB-DU without the use of an RRC UL message. Furthermore, Fig. 9 illustrates the Handover command message (e.g. RRCReconfiguration message) transmitted from the gNB to the UE, instructing the UE to detach from the source cell and attach to the new target cell (Target gNB).

However, the inventors have also identified drawbacks in connection with this First Solution. In particular, transmitting the converted handover command to the UE still retains an interruption time overhead because of the packet forwarding between the gNB-DU and the gNB-CU (due to the handover decision being performed by the higher layer at the gNB-CU). Moreover, for the similar reason, although the L1 measurement report is addressed to the lower layer at the gNB-DU, the measurement results must be sent to the higher layer at the gNB-CU, responsible for taking the handover decision. Therefore, according to the First Solution, the interruption time is only reduced at the UE side due to the L1 measurement reporting, but not at the network side for transmitting the handover command.

In the following, further solutions of improved conditional handover procedures and parts thereof are presented that facilitate avoiding one or more of the above described disadvantages.

### Second Solution

In the following an improved conditional handover procedure according to the Second Solution will be presented so as to overcome one or more of the above identified disadvantages of the prior art.

In the following, UEs, base stations (e.g. distributed unit and central unit thereof), integrated circuits and respective procedures to meet these needs will be described for the new radio access technology envisioned for the 5G mobile communication systems, but which may also be used in previous LTE-based mobile communication systems or future (e.g. 6G) mobile communication systems. In particular, while 3GPP is currently developing Rel. 18 and 19 of the 5G (-Advanced) mobile communication system, 3GPP has already started planning for the next generation, 6G, of communications systems.

Different implementations and variants of the improved conditional handover procedure will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to terminology used in the current 3GPP 5G standardization (possibly also used before in LTE/LTE-A systems), even though specific terminology to be used in the context of the new radio access technology for the next communication systems (e.g. 6G) may not be fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "**base station**" or "**radio base station**" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be a gNB in a Non-Terrestrial Network (NTN) NR system.

The base station can be implemented exemplarily in a split architecture (see Fig. 3), according to which a gNB can be split into a gNB-CU (Central Unit) providing support for the higher layers (e.g. RRC) and one or more gNB-DUs (Distributed Units) providing support for the lower layers (e.g. MAC, PHY).

Communication between the UE and the base station is typically standardized and may be defined by different layers, such as PHY, MAC, RRC etc. (see above background discussion).

The term "**update**" in connection with updating the conditional handover configuration can be broadly understood as "**changing**" or "**reconditioning**" of the conditional handover configuration. In one example, the "update" of the conditional handover configuration is to be understood as being limited by what is already defined by the conditional handover configuration (e.g. activating or inactivating an evaluation, conditional handover cell or an execution condition, or changing an execution condition or parameter thereof), not covering the addition of further candidate handover cells or execution conditions or the removal of initially-defined candidate handover cells or execution conditions. Other possible terms could be "**adapt**", "**control**", and "**manage**".

The terms "**inactivate**" and "**activate**" in connection with the CHO evaluations is to be broadly understood as a concept of controlling whether a CHO evaluation is performed or not. Other possible terms could be used, such as "**stop**" and "**start**" respectively, or "**disable**" and "**enable**" respectively.

The expression "**not perform evaluation**" and similar expressions such as "**not perform any inactivated evaluation**" can e.g. be understood in the context of a conditional handover, in the sense that the UE is not required to perform the evaluation. Further, even if the UE would perform the inactivated evaluation or part of the inactivated evaluation (e.g. when the UE has two radios, one radio could be used for connection with the source cell, the other could be used already for an evaluation, e.g. tuning its radio to that channel already, which could save time), the UE will not perform the CHO associated with said evaluation even if the inactivated evaluation would result in that the corresponding execution conditions are evaluated to be fulfilled (until the evaluation is activated).

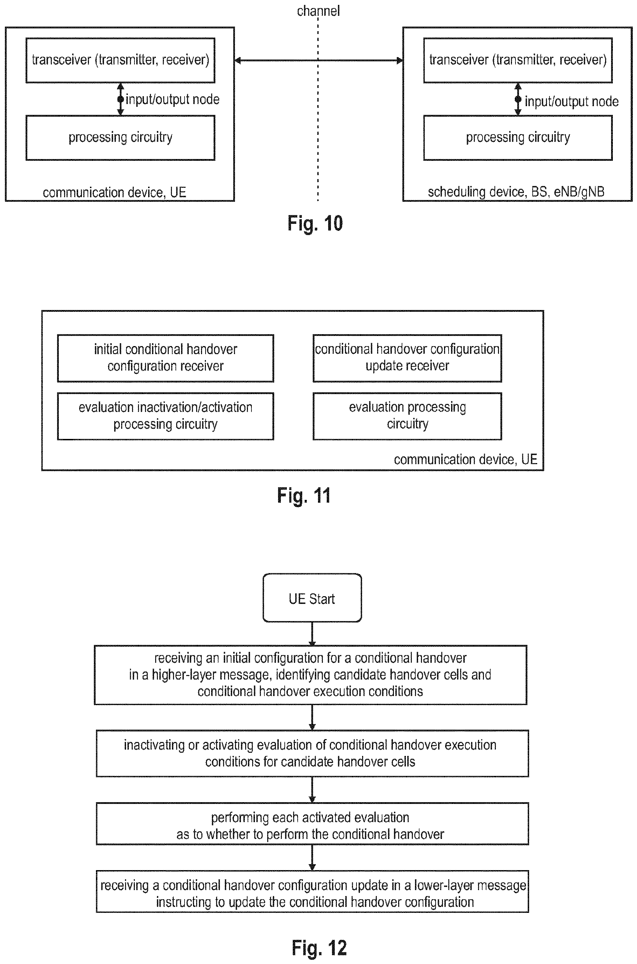

**Fig. 10** illustrates a general, simplified and exemplary block diagram of a user equipment (also termed communication device) and a scheduling device (here exemplarily assumed to be located in the base station, e.g., the LTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e., control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

The present disclosure relates to different solutions (and respective variants) of an improved conditional handover procedure. Improved UEs, improved base stations and improved integrated circuits are presented in connection therewith, which participate separately or together in the improved conditional handover procedures. Corresponding methods for the UE behavior and the base station behavior are provided as well. The integrated circuits may correspond to the UE and base station, and respectively their behavior.

**Fig. 11** illustrates a simplified and exemplary UE structure according to a basic implementation of the improved conditional handover procedure of the Second Solution presented in more detail below. In one example, the UE structure can be implemented based on the general UE structure explained in connection with Fig. 10. The various structural elements of the UE illustrated in said Fig. 11 can be interconnected between one another e.g., with corresponding input/output nodes (not shown) e.g., in order to exchange control and user data and other signals. Although not shown for illustration purposes, the UE may include further structural elements.

As apparent from Fig. 11 the UE may include an initial conditional handover configuration receiver, and evaluation inactivation/activation processing circuitry, a conditional handover configuration update receiver, and evaluation processing circuitry.

The processing circuitry of the general UE structure of Fig. 10 can be implemented as the above evaluation inactivation/activation processing circuitry and evaluation processing circuitry of Fig. 11, and can also perform further functions as will be become apparent from below. The transceiver of Fig. 10 can function as the above initial conditional handover configuration receiver and conditional handover configuration update receiver of Fig. 11, and can also perform further functions as will become apparent from below.

One exemplary procedure is implemented by a UE that includes the following. A receiver of the UE receives from a base station, an initial configuration for a conditional handover in a higher-layer message, wherein the initial conditional handover configuration identifies one or more candidate handover cells and one or more execution conditions for executing the conditional handover. Processing circuitry of the UE inactivates or activates evaluation of conditional handover execution conditions for candidate handover cells, in response to the received initial conditional handover configuration. The processing circuitry performs, for each activated evaluation, the evaluation of the one or more conditional handover execution conditions as to whether to perform the conditional handover towards one of the candidate handover cells. The receiver receives, from the base station, a conditional handover configuration update in a lower-layer message, wherein the conditional handover configuration update instructs the UE to update the conditional handover configuration.

A corresponding exemplary method comprises the following steps performed by a UE:
receiving from a base station, an initial configuration for a conditional handover in a higher-layer message, wherein the initial conditional handover configuration identifies one or more candidate handover cells and one or more execution conditions for executing the conditional handover,
inactivating or activating evaluation of conditional handover execution conditions for candidate handover cells, in response to the received initial conditional handover configuration,
performing, for each activated evaluation, the evaluation of the one or more conditional handover execution conditions as to whether to perform the conditional handover towards one of the candidate handover cells, and
receiving, from the base station, a conditional handover configuration update in a lower-layer message, wherein the conditional handover configuration update instructs the UE to update the conditional handover configuration.

A corresponding sequence diagram for an exemplary UE behaviour in line with the above-discussed UE and UE method is presented in **Fig. 12**.

The above-described improved conditional handover procedure at the UE facilitates achieving the objective and overcoming at least some of the drawbacks explained above. According to the Second Solution, the UE is able to participate in the improved conditional handover procedure, according to which an initial configuration for the conditional handover is prepared by the higher layers of a base station (e.g. implemented at a central unit of the base station) and accordingly transmitted to the UE. On the other hand, the subsequent operation and management of the conditional handover configuration is possible by lower layers of the base station (e.g. implemented at a distributed unit of the base station). The improved conditional handover procedure thus allows subsequent updates of the initially prepared conditional handover configuration, to take into account changing conditions at the candidate handover cells, e.g. due to dynamic network conditions, dynamic radio conditions etc. For instance, less good candidate handover cells could be deactivated for the evaluation of the conditional handover. As another example, by reconditioning the execution conditions (e.g. a parameter thereof), less good candidate handover cells would still be evaluated by the UE but could be deprioritized as a potential target cell of the conditional handover.

Furthermore, splitting the initial configuration and the subsequent management respectively between the higher and lower layers of the base station allows to reduce the delay in providing the conditional handover configuration updates to the UE, because the lower layers of a base station allow for a fast operation. For instance, the message processing delays at the higher layers in DL and UL are avoided. Moreover, the concept of differentiating between active and inactive evaluations with respect to the initially prepared conditional handover configuration facilitates the split configuration and management, because it facilitates changing merely a status of the evaluation while however maintaining an initial configuration of the conditional handover (e.g. including configuration of the handover cells and execution conditions). The improved conditional handover procedure according to the Second Solution may result in that the risk of handover failures (see Fig. 8) is reduced.

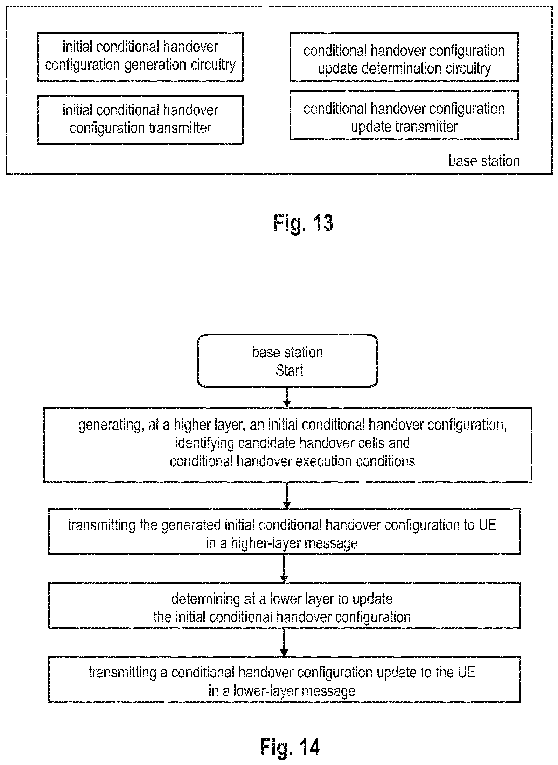

Fig. 13 illustrates a simplified and exemplary base station structure according to an exemplary implementation of the improved conditional handover procedure of the Second Solution, which can be implemented based on the general base station structure explained in connection with Fig. 10. The various structural elements of the base station illustrated in said Fig. 13 can be interconnected between one another e.g., with corresponding input/output nodes (not shown) e.g., in order to exchange control and user data and other signals. Although not shown for illustration purposes, the base station may include further structural elements.

As apparent therefrom, the base station comprises an initial conditional handover configuration generation circuitry, a conditional handover configuration update determination circuitry, an initial conditional handover configuration transmitter, and a conditional handover configuration update transmitter.

The processing circuitry of the general base station structure of Fig. 10 can be implemented as the above initial conditional handover configuration generation circuitry and conditional handover configuration update determination circuitry of Fig. 13, and can also perform further functions as will be become apparent from below. The transceiver of Fig. 10 can function as the above initial conditional handover configuration transmitter and conditional handover configuration update transmitter of Fig. 13, and can also perform further functions as will become apparent from below.

One exemplary procedure is implemented by a base station that includes the following. Processing circuitry of the base station generates, at a higher layer, an initial configuration for a conditional handover to be performed by a user equipment, UE, wherein the initial conditional handover configuration identifies one or more candidate handover cells and one or more execution conditions for executing the conditional handover. A transmitter of the base station transmits the generated initial conditional handover configuration to the UE, in a higher-layer message. The processing circuitry determines, at a lower layer, to update the initial conditional handover configuration. The transmitter transmits, to the UE, a conditional handover configuration update in a lower-layer message, wherein the conditional handover configuration update instructs the UE to update the conditional handover configuration.

A corresponding exemplary method comprises the following steps performed by a base station:
generating, at a higher layer, an initial configuration for a conditional handover to be performed by a user equipment, UE, wherein the initial conditional handover configuration identifies one or more candidate handover cells and one or more execution conditions for executing the conditional handover,
transmitting the generated initial conditional handover configuration to the UE, in a higher-layer message,
determining, at a lower layer, to update the initial conditional handover configuration, and
transmitting, to the UE, a conditional handover configuration update in a lower-layer message, wherein the conditional handover configuration update instructs the UE to update the conditional handover configuration.

A corresponding sequence diagram for an exemplary base station behaviour in line with the above-discussed base station and base station method is presented in **Fig. 14****.**

The above-described improved conditional handover procedure at the base station facilitates achieving the objective and overcoming at least some of the drawbacks explained above. According to the Second Solution presented above, an initial configuration for the conditional handover is prepared by the higher layers of the base station (e.g. implemented at a central unit of the base station) and accordingly transmitted to the UE. On the other hand, the subsequent operation and management of the conditional handover configuration is possible by lower layers of the base station (e.g. implemented at a distributed unit of the base station). The improved conditional handover procedure thus allows subsequent updates of the initially prepared conditional handover configuration, to take into account changing conditions at the candidate handover cells, e.g. due to dynamic network conditions, dynamic radio conditions etc. Furthermore, splitting the initial configuration and the subsequent management respectively between the higher and lower layers of the base station allows to reduce the delay in providing the conditional handover configuration updates to the UE, because the lower layers of a base station allow for a fast operation. The concept of differentiating between active and inactive evaluations with respect to the initially prepared conditional handover configuration facilitates the split configuration and management, because it facilitates changing merely a status of the evaluation while however maintaining an initial configuration of the conditional handover (e.g. including configuration of the handover cells and execution conditions). The improved conditional handover procedure according to the second solution may result in that the risk of handover failures (see Fig. 8) is reduced.

According to a further exemplary implementation, after the conditional handover has been executed by the UE towards a handover target cell (e.g. after CHO evaluation at the UE has been satisfied), the UE retains the initial CHO configuration, as sent by the upper layer of the base station (does not delete the initial CHO configuration) at the new cell. Correspondingly, the retained initial CHO configuration can be used by the UE again for a CHO at the new cell. As a result, the same candidate handover cells remain available for the UE for performing a CHO when attached at the new cell after the previous CHO. The source BS may configure the UE to maintain the CHO, or this can be specified in advance at the UE, e.g. by the UE specification which the UE is implemented upon.

The new base station can but need not change the initial CHO configuration if the list of candidate cells and/ or the list of execution conditions from the initial conditions handover preparation phase remains valid for subsequent handovers executed by UE. However, according to the Second Solution the initial CHO configuration can be updated further by the lower layers of the new base station for subsequent conditional handovers executed by UE, which is moving from one target cell to the next target cell.

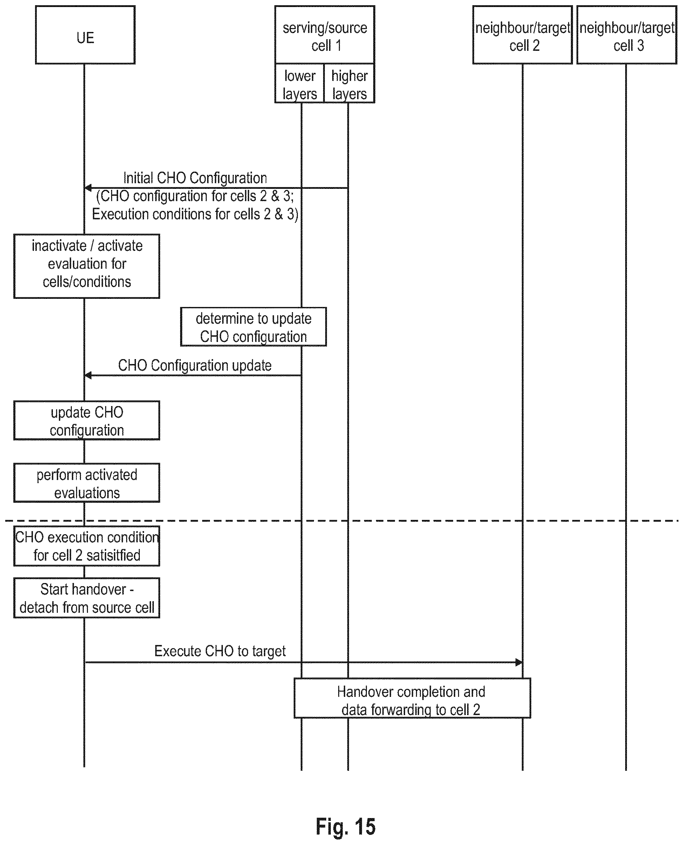

**Fig. 15** is a signaling diagram of an exemplary and simplified implementation of the improved conditional handover procedure of the Second Solution, illustrating the exchange of messages between the different participating entities (here the UE and the gNBs) and the steps performed at these entities. The UE behaviour and gNB behaviour follow the above described UE and base station and the respective methods.

As apparent from Fig. 15, the source gNB is illustrated so as to differentiate between lower layers of the gNB and higher layers of the gNB. In line with the description of the improved conditional handover procedure above, the higher layers (e.g. the RRC) of the source cell (source base station) are responsible for preparing and transmitting the initial conditional handover configuration to the UE; the transmission may correspondingly be using a higher-layer message.

The UE, then, inactivates or activates the evaluation of the conditional handover, via the execution conditions and/or the candidate handover cells, in response to the initial conditional handover configuration.

Although illustrated in Fig. 15 at a later point of time (exemplarily after receiving the conditional handover configuration update), the UE can start to perform the evaluations of conditional handovers that have been determined as active already after receiving the initial conditional handover configuration and determining the active and inactive evaluations. For instance, the evaluation process can be performed continuously at the UE side, for any active evaluation.

As further illustrated in Fig. 15, the lower layers at the gNB determine to update the conditional handover configuration and transmit a corresponding conditional handover configuration update to the UE; the transmission may correspondingly be using a lower-layer message. The received update message triggers the UE to update the conditional handover configuration accordingly.

Although not described above in connection with Fig. 11-14, Fig. 15 additionally illustrates below the dashed horizontal line further processes of the improved conditional handover procedure. It is assumed that the UE eventually will consider that execution conditions for a conditional handover to a candidate handover cell are fulfilled (e.g. to cell 2, as illustrated in Fig 15). In that case, the UE proceeds to execute the handover to said target cell 2. In one exemplary implementation the conditional handover execution can be performed between the UE and the target cell according to a usual manner (legacy CHO execution). For example, performing the CHO to a handover target cell may comprise performing a random access procedure between the UE and said handover target cell, which facilitates achieving uplink and downlink synchronization between the UE and the handover target cell.

In the above, the improved conditional handover procedure was explained on the basis of differentiating between lower layers of the gNB and higher layers of the gNB. On the other hand, the improved conditional handover procedure can also be implemented at a gNB with a split architecture (see Fig. 3), according to which the gNB can be split into a gNB-CU (Central Unit) and one or more gNB-DUs (Distributed Units). In such an exemplary implementation of the improved conditional handover procedure, the gNB-DU would be responsible to perform the processes described in relation to the lower layers (e.g. MAC, PHY), wherein the gNB-CU would be responsible to perform the processes described so far in relation to the higher layers (e.g. RRC).

In the following explanation of further variants and implementations of the improved conditional handover procedure according to the Second Solution, the split architecture of a gNB is exemplarily assumed for only explanatory purposes. However, any of these further variants and implementations of the improved conditional handover procedure according to the Second Solution are equally applicable to a non-split architecture of a gNB, with the lower layers of the non-split gNB corresponding to the gNB-DU and the higher layers of the non-split gNB corresponding to the gNB-CU.

The different processes at the UE side and the base station have been explained with respect to above Fig. 11-15. More detailed and exemplary implementations of these processes of the improved conditional handover procedure according to the Second Solution will be explained in the following.

### <Initial conditional handover configuration>

As explained above with respect to Fig. 11-15, the UE receives from the base station an initial configuration for a conditional handover in a higher-layer message. The initial conditional handover configuration identifies one or more candidate handover cells and one or more execution conditions for executing the conditional handover. Exemplary implementations thereof will be explained in more detail below.

In one example, the execution conditions may be any suitable execution condition, such as those known in legacy systems. For example, a CHO execution condition may in turn consists of one or more event trigger conditions to be evaluated by the UE for a CHO.

The initial conditional handover configuration is generated at the base station side, particularly at a higher layer of the gNB such as the RRC. Correspondingly, the thus generated initial CHO configuration is transmitted from the gNB to the UE in a higher-layer message such as an RRC message. This has the benefit that the control of the initial CHO configuration rests with the higher layers of the gNB. For instance, the subsequent management by the lower layers of the gNB (see separate section below) is then limited by what was initially defined by the higher layer (e.g. it is allowed to activate or inactivate candidate handover cells and/or execution conditions already defined in said initial CHO configuration). Another term for the initial conditional handover configuration could be "conditional L1/L2 (lower layer) triggered mobility configuration" or in short "conditional LTM configuration", in view of that it is the lower layer of the gNB (e.g. gNB-DU) that controls or triggers/activates the conditional handover decisions at the UE side.

The initial conditional handover configuration identifies candidate handover cells to which a conditional handover can be performed by the UE, among a plurality of neighbouring cells of the UE. In one example, the gNB determines these candidate handover cells for the initial CHO configuration, which could be the best cells among all or some of the neighbouring cells of the UE and can be determined based e.g. on measurement results received from the UE and optionally further based on information available at the gNB such as information on network conditions at the corresponding neighboring cells of the UE.

Moreover, one concept of the improved conditional handover procedure is to differentiate between an active and an inactive evaluation of a configured CHO, in addition to defining the candidate handover cells available for a UE to perform CHO. No such differentiation between an active and inactive CHO evaluation exists in hypothetical prior art systems, according to which a conditional handover configuration works on the assumption that the UE evaluates any configured candidate handover cell and associated execution conditions for a possible CHO; thus, in such prior art systems, the evaluations are by default active and need to be performed by the UE in any case. On the other hand, according to the improved conditional handover procedure, the gNB has the ability to determine whether and which CHO evaluations are to be active and inactive for the UE. The initial CHO configuration can reflect the result of the active/inactive determination.

This active / inactive determination at the gNB side can be performed based on different information available at the gNB, such as information on network conditions and/or measurement results obtained from the UE. For instance, the active / inactive determination of evaluations can change when the corresponding underlying information (e.g. network conditions and/or measurement results) changes.

As presented so far, the initial conditional handover configuration primarily includes information on the candidate handover cells and associated conditional handover execution conditions. According to a further exemplary implementation, the UE is provided with a lower-layer measurement reporting configuration, which configures the UE to report results of previously-performed measurements to the gNB using lower-layer messages. In one example, the lower-layer measurement reporting configuration can be transmitted from the gNB to the UE as part of the initial conditional handover configuration. More details on this exemplary improvement are provided separately below.

In a further exemplary implementation, the candidate handover cells from the initial CHO configuration can be informed about the possible handover of the UE. For instance, this may include that the UE context is shared between the gNB-CU and the candidate handover cells as part of the CHO candidate preparation. This has the benefit that the candidate handover cells already know the UE and possibly have the corresponding UE context, and thus need not obtain same otherwise.

### <Inactivating or activating the evaluation of a conditional handover>

As explained above with respect to Fig. 11-15, the UE performs the step of inactivating or activating an evaluation of a conditional handover, e.g. in response to the initial conditional handover configuration but also in response to the conditional handover configuration update. Exemplary implementations thereof will be explained in more detail below.

In one example implementation, the inactivating or activating of the evaluation comprises one or both of:
- inactivating or activating a candidate handover cell, and
- inactivating or activation a conditional handover execution condition.

During the evaluation the UE evaluates whether a conditional handover is to be performed to a candidate handover cell by evaluating whether one or more of the conditional handover execution conditions, associated with said candidate handover cell, are fulfilled.

In one case, the respective inactivation / activation can be performed e.g. by inactivating / activating a candidate handover cell. Correspondingly, the inactivating / activating is done per candidate handover cell. For instance, the UE would not consider the inactivated candidate handover cell as being a candidate for the conditional handover, and thus will not perform the evaluation. This could imply that the conditional handover execution conditions associated with that inactivated candidate handover cell would not be evaluated as to whether they are fulfilled. On the other hand, a particular conditional handover execution condition could be associated with an activated candidate handover cell and with an inactivated candidate handover cell, in which case the UE would evaluate the particular conditional handover execution condition for the activated candidate handover cell but not for the inactivated candidate handover cell.

In another case, the respective inactivation / activation can be performed e.g. by inactivating / activating a conditional handover execution condition. Correspondingly, the inactivating / activating is done per conditional handover execution condition. For instance, the UE would not evaluate the inactivated conditional handover execution condition for any (activated) candidate handover cell associated therewith. On the other hand, even if one particular conditional handover execution condition may be inactivated for one (active) candidate handover cell, the conditional handover might still be executed to that (active) candidate handover cell in case another activated conditional handover execution condition associated therewith is fulfilled.

In still another case, the respective inactivation / activation can be performed e.g. by inactivating / activating both a candidate handover cell and a conditional handover execution condition.

Correspondingly, the inactivating / activating is done per combination of candidate handover cell and conditional handover execution condition. For instance, this would be a more flexible and more targeted implementation, because it allows to inactivate one particular conditional handover execution condition for only one particular candidate handover cell, rather than for all candidate handover cells that are associated with said one particular conditional handover execution condition.

According to a further exemplary implementation, the process of inactivating or activating the evaluation is based on information comprised in the initial conditional handover configuration or comprised in the conditional handover configuration update. Correspondingly, the included information could be e.g. an inactivation / activation instruction that instructs the UE how to perform the inactivation / activation. Such information, e.g. a bit, would be associated with either one or both of candidate handover cells and conditional handover execution conditions, already identified and defined by the initial conditional handover configuration.

In the following, different variants will be explained on how the activation / inactivation can be applied in the context of the initial CHO configuration.

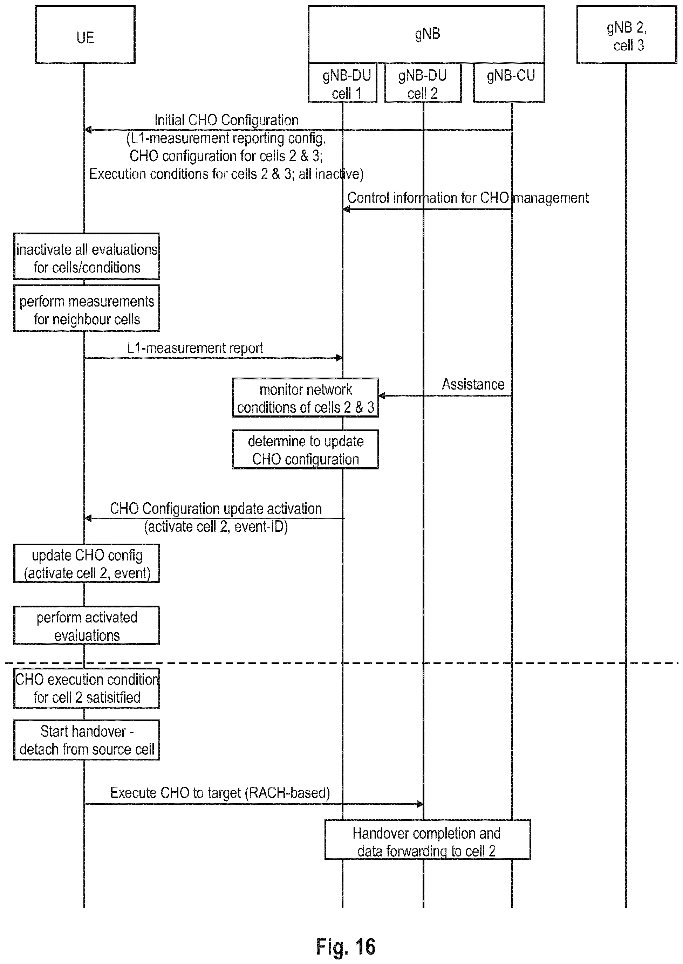

According to a first variant (see below <First detailed implementation> and Fig. 16), the initial CHO configuration configures all the CHO evaluations to be inactive in the beginning. Correspondingly, the UE inactivates all the evaluations configured by the initial CHO configuration and thus does not perform any evaluation upon receiving the initial CHO configuration. At a later point of time, the lower-layer of the gNB is then responsible to activate some or all of the evaluations using the CHO configuration update, such that the UE then performs those CHO evaluations that have been activated by the update.

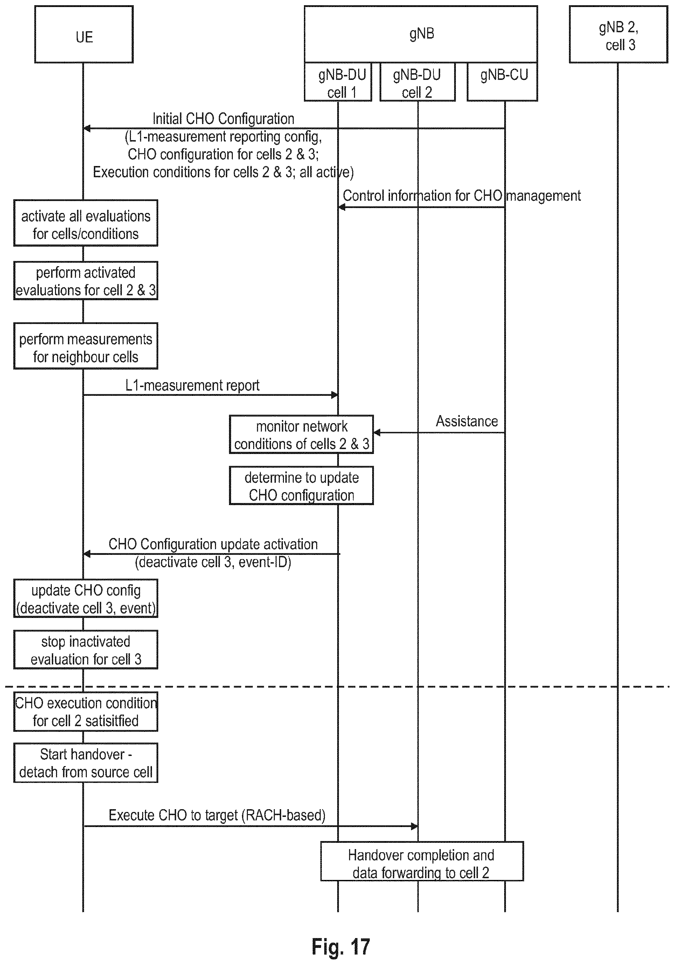

According to a second variant (see below <Second detailed implementation> and Fig. 17), the initial CHO configuration configures all the CHO evaluations to be active in the beginning. Correspondingly, the UE activates all the evaluations configured by the initial CHO configuration and thus performs all the evaluations upon receiving the initial CHO configuration. At a later point of time, the lower-layer is then responsible to inactivate some or all of the evaluations using the CHO configuration update, such that the UE then stops performing those CHO evaluations that have been inactivated by the update.

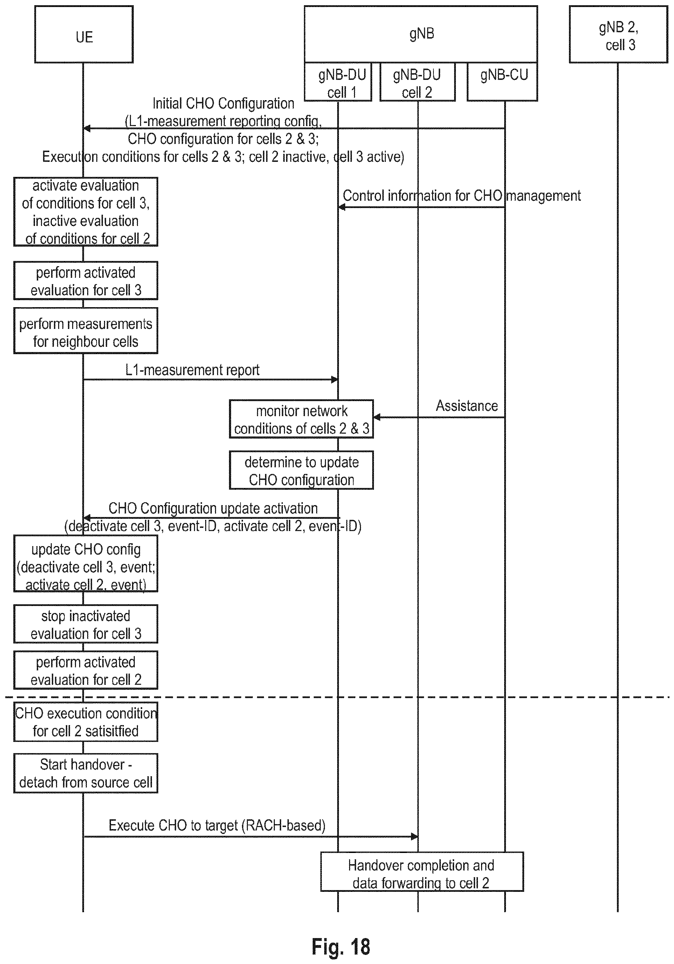

According to a third variant (see below <Third detailed implementation> and Fig. 18), the initial CHO configuration may flexibly configure the CHO evaluations to be active or inactive in the beginning. Correspondingly, the UE sets the CHO evaluations to be inactive or active, as configured. The UE, in response to the initial CHO configuration, performs the active CHO evaluations and does not perform the inactive CHO evaluations. At a later point of time, the lower-layer is then responsible to inactivate or activate the CHO evaluations using the CHO configuration update.

### <Conditional handover configuration update>

As explained above with respect to Fig. 11-15, the UE receives from the base station a conditional handover configuration update in a lower-layer message, wherein the conditional handover configuration update instructs the UE to update the conditional handover configuration. Exemplary implementations thereof will be explained in more detail below.

One important aspect of the CHO configuration update procedure as part of the improved CHO procedure of the Second Solution is that it is performed at a lower layer, such as the MAC or PHY of the UE and gNB. For instance, the lower layer of the UE processes the received CHO configuration update message so as to determine how to update the current CHO configuration; forwarding the CHO configuration update to a higher-layer of the UE is thus not necessary. This facilitates avoiding a further time delay, involved in message processing and forwarding.

Correspondingly, the CHO configuration update is transmitted from the gNB to the UE in a lower-layer message, such as a MAC CE (Layer 2 message) or a DCI message (Layer 1 message).

The lower layer of the gNB decides on what to update in the CHO configuration currently defined in the UE (e.g. the initial CHO configuration). This for instance can be done based on information available at the gNB, such as measurement results received from the UE and/or information on network conditions of the candidate handover cells. For instance, changes in the radio conditions or network conditions may lead the gNB to decide that the current CHO configuration at the UE is no longer optimal. As one example, the network congestion (as an example of a network condition) for a candidate handover cell might have increased substantially, such that the lower layer of the gNB could decide to inactivate the CHO to that congested candidate handover cell. The gNB lower layer would generate the CHO configuration update accordingly to instruct the UE to inactivate the CHO to said congested candidate handover cell (e.g. by setting the status of the candidate handover cell to inactive or by setting the status of the execution conditions associated with said candidate handover cell to inactive). The CHO configuration update thus facilitates that the handover to the congested handover cell is not attempted by the UE. Handover failure might thus be avoided.

In exemplary implementations, the updating of the conditional handover configuration might comprise one or more of the following:
- activating an evaluation of a CHO in general,
- activating an inactive candidate handover cell,
- activating an inactive conditional handover execution condition,
- deactivating an evaluation of a CHO in general,
- deactivating an active candidate handover cell,
- deactivating an active conditional handover execution condition.

According to the above options for updating the CHO configuration, the active/inactive status can be directly indicated (e.g. using an active/inactive instruction or bit) or toggled (e.g. status is changed to the converse status) by the CHO configuration update.

In addition, the updating of the conditional handover configuration might also comprise adapting a parameter of a conditional handover execution condition. This facilitates controlling a priority of performing a conditional handover based on said adapted CHO execution condition, relative to other CHO execution conditions and thus other candidate handover cells. The parameter can for instance be indicated using a parameter ID (associated with a particular parameter value, known to the UE); another possibility is that the parameter value is directly indicated (using bits) within the CHO configuration update message.

Depending on the parameter and its influence on the fulfilment of the execution condition, adapting the parameter can increase or decrease the likelihood that the corresponding adapted execution condition is fulfilled for a particular candidate handover cell. According to one example, the parameter can be a measurement offset parameter of the execution condition, same or similar to the parameters Ofn or Ocn described above in connection with Event A3.

In the above, the CHO configuration update was described as a single (lower-layer) message. Correspondingly, the single CHO configuration update message is flexible in that is usable for instructing the different updating types, i.e. activating, and inactivating, and adapting. In one example, such a single CHO configuration update message may thus differentiate between an inactivation and an activation, e.g. by including activation or inactivation information associated with the element to be activate/inactivated (e.g. indicating a candidate handover cell associated with an activation indication). In another example, the single CHO configuration update message relies on a toggle-mechanism according to which the inactive/active status is simply toggled, in which case a separate activation/inactivation information is not required. For example, by indicating a candidate handover cell in the CHO configuration update, the UE toggles the current status of said indicated candidate handover cell (e.g. inactive) to the converse status (e.g. active).

In addition or alternatively, the CHO configuration update can be implemented as separate messages, e.g. one CHO configuration update message dedicated to the activation, another CHO configuration update message dedicated to the inactivation, and still another CHO configuration update message dedicated to the parameter adaptation. Such dedicated CHO configuration update messages would not necessarily require activation/inactivation information to be included, because the UE derives from the CHO configuration update message type whether it refers to an activation or inactivation.

Following from the above, the update can be broadly understood as changing or adapting part of what is already defined by the initial conditional handover configuration. When exemplarily considering that repeated CHO configuration updates are possible, such an update can be broadly understood as changing or adapting part of the CHO configuration currently stored at the UE. In one example, the CHO update is limited by what is already defined by the current CHO configuration, e.g. activating or inactivating an evaluation, a conditional handover cell or an execution condition, changing an execution condition or parameter thereof as described. In such an example, adding further candidate handover cells or execution conditions or removing/deleting currently defined candidate handover cells or execution conditions would not be possible for the CHO configuration update by the lower layers of a gNB. This limitation of what a CHO configuration update can change is advantageous in that the higher layer of the gNB maintains some important control of the CHO configuration at the UE, while at the same time allowing the lower layer of the gNB flexibility to manage and optimize the CHO configuration.

In another example, the CHO configuration update is not or only partly limited by what is already defined by the current CHO configuration. For instance, the lower layer of the gNB might be allowed to remove already-configured candidate handover cells but is not allowed to add new candidate handover cells, or vice versa. Similarly, the lower layer of the gNB might be allowed to remove already-configured execution conditions but is not allowed to add new execution conditions, or vice versa.

According to an exemplary implementation, the CHO configuration update may comprise one or more of the following:
- identification information for identifying a candidate handover cell from the (initial) conditional handover configuration, (e.g. bits in binary form identify the candidate handover cell within the CHO configuration of the UE),
- identification information for identifying a conditional handover execution condition from the (initial) conditional handover configuration, (e.g. Event A3, A4, or A5 etc., could be mapped to a set of bits for identification; in one option, the bit values are dedicated for each event; in another option, each bit, within a set of bits, is dedicated to an event, where the corresponding bit is set to e.g. "1" to activate and to "0" to inactivate),
- a parameter of a conditional handover execution condition (e.g. measurement offset parameter mentioned above), (in one option, the bits represent the parameter value; in another option the values are mapped to the corresponding parameter in the (initial) CHO configuration),
- activation / deactivation information (e.g. one bit, e.g. "1" to activate and to "0" to inactivate).

In addition to the above, the CHO configuration update message may comprise further elements. For instance, it may include a message identification (e.g. LCID for MAC CE identification or DCI format ID in case of a L1 message). Corresponding bits in the CHO configuration update message, represented in binary, are used for specifying the type of message or to convey a command operation to UE. For the CHO configuration update, an existing LCID value (such as in case of `R-18 LTM command') could be reused; or a new value for the ID could be defined for the present CHO configuration update message separately.

Still another possible element of the CHO configuration update message is a TCI (Transmission Configuration Indicator) state identification, so as to identify the beam to be used by the UE with the conditional handover cell, once the UE detaches from the source cell.

Still another possible element of the CHO configuration update message is a RACH-related indication, e.g. RACH-less indication. The UE could thus be instructed to perform a CHO without performing a RACH or to perform a CHO by performing a contention-free RACH. This element facilitates combining the Second Solution with the Third Solution presented herein.

Still another possible element of the CHO configuration update message is a CFRA RACH-based resource information: It is possible to provide a dedicated RACH resource (i.e. CFRA) to the UE together with the candidate handover cell. The resource information could be e.g. a RACH preamble index, an SS/PBCH index or a PRACH mask index. This element facilitates combining the Second Solution with the Third Solution presented herein.

Other possible exemplary expressions for the CHO configuration update are "conditional L1/L2 command" or "conditional LTM command".

### <Lower-layer measurement reporting>

A further improvement of the improved conditional handover procedure according to the Second Solution provides an improved measurement reporting. As presented above for some exemplary implementations, the gNB may rely on the results of measurements performed at the UE side, e.g. to determine the candidate handover cells to be included in the initial CHO configuration and to determine how to update the current CHO configuration of the UE.

Although not described above, such measurement results can be obtained from measurement reports transmitted by the UE to the gNB, e.g. using L3 measurement reporting (e.g. RRC messages). As explained above, the updating of the CHO configuration is performed at the lower layers of the gNB (e.g. at the gNB-DU), which however do not have direct access to the layer-3 measurement reports.

The present improvement of the conditional handover procedure implements a lower-layer measurement reporting, such that the lower layer of the gNB has direct access to the measurement results from the UE without delay. The lower layer of the gNB could be e.g. the PHY or MAC layer.

The UE can continuously perform different measurements on its neighbouring cells, e.g. including those candidate handover cells as configured by the initial CHO configuration, but also including other previously-known or new cells. The measurements as such can but need not be limited to layer-1 measurements. Rather, the UE may perform one or more of layer-1 measurements (such as radio measurements; see e.g. above section "Radio quality/ quantity measurements") and layer-3 measurements (such as the distance-based measurements or time-based measurements; see e.g. above sections "Distance based measurements" and "Time based measurements" respectively).

The results of the measurements are then transmitted by the UE to the gNB at a lower layer and thus using lower-layer messages, e.g. an UL MAC CE or an UL PUCCH / PUSCH message. Such lower-layer messages are quicker compared to the layer-3 measurement reporting.

The lower-layer measurement reporting is thus particularly helpful for the lower-layer process of updating the CHO configuration, because the lower-layer has direct access to the measurement results and can directly decide on how to best update the CHO configuration.

In order to suitably configure the UE for lower-layer measurement reporting, the gNB can transmit a corresponding measurement reporting configuration to the UE, in response to which the UE is configured to report any associated measurement results using lower-layer messages, e.g. using MAC CE, PUCCH or PUSCH. In one example, the measurement reporting configuration can be transmitted to the UE as part of the initial CHO configuration. However, it is also possible that the measurement reporting configuration is transmitted to the UE separately from the initial CHO configuration. In one example, apart from defining the use of lower-layer messages for the reporting, the measurement reporting configuration may also configure the reporting type, e.g. periodic reporting, semi-persistent reporting, aperiodic reporting, or event-triggered reporting (see above section on the reporting types).

### <Further Variations>

Different implementations and variants of the improved CHO procedure have been explained above. Further exemplary implementations thereof will be explained in more detail below.

The above improved CHO procedure introduces a lower-layer-based CHO configuration update procedure performed by the lower-layer of the gNB. In one example implementation, in addition to said lower-layer-based CHO configuration update, the gNB, particularly its higher layer, has the possibility to perform a higher-layer-based CHO configuration update procedure. In particular, the higher-layer of the gNB can determine to update the current CHO configuration and to then transmit, in a higher-layer message, a corresponding CHO configuration update to the UE. In response, the UE processes the higher-layer CHO configuration update and updates its current CHO configuration according to the received CHO update.

For instance, the higher-layer-based CHO configuration update procedure can be more flexible and free on how to update the current CHO configuration, compared to the lower-layer CHO configuration update. As one example, while the lower-layer CHO configuration update would be limited by the initial CHO configuration (set up by the higher layer), the higher-layer CHO configuration update procedure could be allowed to add further candidate handover cells to the initially configured ones or completely remove candidate handover cells from the initially configured ones.

The higher-layer-based CHO configuration update procedure may also rely on higher-layer measurement reports (such as the L3 measurement reports) and need not necessarily benefit from the lower-layer measurement reports, compared to the lower-layer-based CHO configuration update procedure.

The implementation increases the flexibility and robustness overall, because it allows to update, change and replace an initially configured CHO configuration using different procedures at different layers.

As presented above, the improved CHO procedure of some implementations relies on information on the network congestion (or more broadly network conditions) in the candidate handover cells, e.g. when determining the candidate handover cells for the initial CHO configuration or when determining how to update the CHO configuration. The lower layer of the gNB can obtain such information on the network conditions.

When exemplarily assuming a split-gNB architecture, a gNB-DU can control one or more cells. In case that the candidate handover cell is under control of the same current gNB-DU (intra-DU cell), the gNB-DU can directly obtain the network condition information for said intra-DU candidate handover cell. On the other hand, in case the candidate handover cell is not under control of the same current gNB-DU (e.g. under control of another gNB-DU of the same gNB-CU, inter-DU cell; or under control of another gNB-CU, inter-CU cell), the gNB-DU is assisted by the gNB-CU to obtain network condition information for such inter-DU or inter-CU candidate handover cells. For instance, such assistance can be performed autonomously by the gNB-CU, by e.g. periodically providing the network condition information to the gNB-DU. In addition, or alternatively, such assistance can be provided by the source gNB-CU when requested by the source gNB-DU.

As presented above, the lower layer of the gNB performs the CHO configuration update procedure as part of the improved CHO procedure of the Second Solution. In one example implementation, the higher layer of the gNB provides control information to the lower layer of the gNB to facilitate this CHO configuration update procedure. For instance, the control information could be the complete initial CHO configuration or parts thereof (such as information on the active or inactive CHO evaluations), and optionally the lower-layer measurement reporting configuration.

In the above, an improved conditional handover procedure according to the Second Solution was presented, including different variants and implementations thereof. In the following, three different implementations will be presented in detail, based on some of the above described disclosure. In these three detailed implementations, a split gNB architecture is assumed for the source gNB, where the UE is currently attached to cell 1 under control of one gNB-DU. There is a further gNB-DU controlling another cell 2, and the gNB-CU. In addition, a further cell 3 is assumed, controlled by another different gNB 2.

### <First detailed implementation>

The exemplary first detailed implementation will be explained together with Fig. 16, which is a signaling diagram, illustrating the exchange of messages between the different participating entities (here the UE and the gNBs) and the steps performed at these entities.

For the first detailed implementation, it is exemplarily assumed that the initial CHO configuration configures all the CHO evaluations to be inactive in the beginning. For instance, in the present example, all the execution conditions for cells 2 and 3 are set to "inactive" execution. Correspondingly, the UE, upon receiving the initial CHO configuration, in which all evaluations are set to 'inactive execution', does not actively evaluate the execution conditions for the candidate cells.

As apparent from Fig. 16, the gNB-CU may configure L1-measurement reporting for the UE, to assist the gNB-DU to monitor the channel/radio conditions for the CHO management. The L1-measurement reporting configuration is transmitted by the gNB-CU to the UE as part of the initial CHO configuration. The UE performs the measurements of the neighbouring cells and transmits results of these measurements to the gNB-DU in a L1-measurement report.

In this example, the gNB-CU also sends control information to the gNB-DU so as to facilitate the CHO configuration management and update at the gNB-DU. The control information sent to the gNB-DU may comprise e.g. the conditional candidate cell configurations and the associated execution conditions which are set to inactive in the initial CHO configuration. Exemplarily, the control information transmitted to the gNB-DU may also include the L1-measurement reporting configuration, such that the gNB-DU is aware which measurement reporting it can expect from the UE.

Based on the control information, the gNB can start the management of the CHO configuration. This may e.g. include that the gNB-DU starts collecting the information of the radio measurements and network conditions for the candidate handover cells as defined in the initial CHO configuration. The gNB-CU may assist the source gNB-DU in obtaining the information on the network conditions, particularly regarding the candidate handover cells 2 and 3, which are not under control of the source gNB-DU. In particular, while network conditions for cells under control of the source gNB-DU (i.e. intra-DU candidate handover cell) would be directly available at the source gNB-DU, this is not the case for candidate handover cells under control of another gNB-DU or another gNB(-CU) (i.e. inter-DU candidate handover cells and inter-CU candidate handover cells). The assistance by the gNB-CU could be autonomously performed or may occur when requested by the gNB-DU.

During the CHO configuration management, the gNB-DU can change the initially-set "inactive" execution to "active" using the CHO Configuration update procedure. Based on the measurement results and/or the network conditions, the gNB-DU might decide that, one or more candidate handover cells (e.g. cell 2) among the ones defined in the initial CHO configuration is suitable for the UE to perform a CHO. The gNB-DU intends to facilitate providing a good service to the UE regarding its mobility. Effectively, the gNB-DU is able to prioritize candidate handover cells for the UE's CHO, by activating good or the best cells for CHO. It should be also noted that the gNB-DU may decide that no update is necessary and thus will not transmit a CHO configuration update message to the UE.

The CHO configuration update is an activation message and may activate the CHO evaluation for cell 2 and the corresponding execution conditions (identified e.g. by an event ID). In one example, such a CHO configuration activation update may identify the candidate handover cell (e.g. using a candidate cell ID referring to the initial CHO configuration) and may identify an execution condition (e.g. events as defined in the initial CHO configuration).

In addition, the gNB-DU may also decide to adapt the parameter of an execution condition to be activated, such as a measurement offset. In that case, the CHO configuration update message would also include information on how to adapt the execution condition parameter.

The UE, upon receiving the CHO configuration update, will start the evaluation of the activated candidate handover cell and execution conditions, as indicated in the update.

In case the execution condition for the CHO to cell 2 is satisfied, the UE proceeds to perform the handover execution, detaching from source cell 1 and attaching to handover target cell 2. It is assumed, that the CHO is RACH-based, i.e. that the UE performs a random-access procedure with the target cell. This facilitates achieving downlink synchronization and uplink synchronization before actually communicating with the target cell after detaching from the source cell.

### <Second detailed implementation>

The exemplary second detailed implementation will be explained together with **Fig. 17**, which is a signaling diagram, illustrating the exchange of messages between the different participating entities (here the UE and the gNBs) and the steps performed at these entities.

For the second detailed implementation, it is exemplarily assumed that the initial CHO configuration configures all the CHO evaluations to be active in the beginning. For instance, in the present example, all the execution conditions for cells 2 and 3 are set to "active" execution.

Correspondingly, the UE, upon receiving the initial CHO configuration, in which all evaluations are set to 'active execution', performs the evaluations of the execution conditions for the candidate cells 2 & 3.

As apparent from Fig. 17 and as discussed already above in connection with the first detailed implementation of Fig. 16,
- the gNB-CU may configure L1-measurement reporting for the UE, to assist the gNB-DU to monitor the channel/radio conditions for the CHO management,
- the gNB-CU also sends control information to the gNB-DU so as to facilitate the CHO configuration management and update at the gNB-DU,
- the gNB-DU starts collecting the information of the radio measurements and network conditions for the candidate handover cells as defined in the initial CHO configuration.

Based on the control information and based on the collected measurement/network information, the gNB can manage the CHO configuration. During the CHO configuration management, the gNB-DU can change the initially-set "active" execution to "inactive" using the CHO configuration update procedure. Based on the measurement results and/or the network conditions, the gNB-DU might decide that, one or more candidate handover cells (e.g. cell 3) among the ones defined in the initial CHO configuration are no longer suitable for the UE to perform a CHO (e.g. due to a bad radio channel or due to network congestion at cell 3). It should be also noted that the gNB-DU may decide that no update is necessary and thus will not transmit a CHO configuration update message to the UE.

The CHO configuration update is an inactivation message and may inactivate the CHO evaluation for cell 3 and the corresponding execution conditions (identified e.g. by an event ID). In one example, such a CHO configuration inactivation update may identify the candidate handover cell (e.g. using a candidate cell ID referring to the initial CHO configuration) and may identify an execution condition (e.g. events as defined in the initial CHO configuration).

The UE, upon receiving the CHO configuration update, will stop the evaluation of the inactivated candidate handover cell 3 and its execution conditions, as indicated in the update. On the other hand, the UE may continue to evaluate the still-active evaluation for candidate handover cell 2 based on its execution conditions.

As apparent from Fig. 17 and as discussed already above in connection with the first detailed implementation of Fig. 16, in case the execution condition for the CHO to cell 2 is satisfied, the UE proceeds to perform the handover execution, detaching from source cell 1 and attaching to handover target cell 2. It is assumed, that the CHO is RACH-based, i.e. that the UE performs a random-access procedure with the target cell. This facilitates achieving downlink synchronization and uplink synchronization before actually communicating with the target cell after detaching from the source cell.

A further variant explained in the following applies to this second detailed implementation, but also more broadly to the Second Solution in which the initial CHO configuration effectively sets all evaluations to be active. In particular, the initial CHO configuration can be assumed to activate all evaluations by default, such that no additional active execution information need to be included in the initial CHO configuration. According to the variant of the Second solution, the lower layer of the gNB would still be able to perform the CHO configuration update procedure and thus obtain the benefits described above.

### <Third detailed implementation>

The exemplary third detailed implementation will be explained together with Fig. 18, which is a signaling diagram, illustrating the exchange of messages between the different participating entities (here the UE and the gNBs) and the steps performed at these entities.

For the third detailed implementation, it is exemplarily assumed that the initial CHO configuration configures some CHO evaluations to be active and other CHO evaluations to be inactive in the beginning. For instance, in the present example, the execution conditions for cell 2 would be set to "inactive" execution and the execution conditions for cell 3 are set to "active" execution. Correspondingly, the UE, upon receiving the initial CHO configuration, performs the active evaluations of the execution conditions for the candidate handover cell 3 but not for candidate handover cell 2.

As apparent from Fig. 18 and as discussed already above in connection with the first detailed implementation of Fig. 16,
- the gNB-CU may configure L1-measurement reporting for the UE, to assist the gNB-DU to monitor the channel/radio conditions for the CHO management,
- the gNB-CU also sends control information to the gNB-DU so as to facilitate the CHO configuration management and update at the gNB-DU,
- the gNB-DU starts collecting the information of the radio measurements and network conditions for the candidate handover cells as defined in the initial CHO configuration.

Based on the control information and based on the collected measurement/network information, the gNB can manage the CHO configuration. During the CHO configuration management, the gNB-DU can change the initially-set "active" execution to "inactive" and conversely, using the CHO configuration update procedure. Based on the measurement results and/or the network conditions, the gNB-DU might decide that one candidate handover cell (e.g. cell 3) among the ones defined in the initial CHO configuration are no longer suitable for the UE to perform a CHO (e.g. due to a bad radio channel or due to network congestion at cell 3). Similarly, the gNB-DU might decide that a candidate handover cell (e.g. cell 2) among the ones defined in the initial CHO configuration is now suitable for the UE to perform a CHO.

The CHO configuration update correspondingly updates the initial CHO configuration by activating the cell-2 related evaluation and by inactivating the cell-3 related evaluation. The CHO configuration update is thus both an inactivation message and activation message. The example of Fig. 18, the CHO configuration update is assumed to be a single message. Alternatively however, the CHO configuration update in this third detailed implementation can be implemented as two separate messages, respectively dedicated for inactivation and activation.

The content of the single CHO configuration update message may correspondingly comprise candidate cell IDs, event IDs and optionally also activation/deactivation information so as to distinguish between activation and inactivation. The content of separate CHO configuration update messages may not require such activation or deactivation information, but implicitly distinguishes the instructions based on the message type.

The UE, upon receiving the CHO configuration update, will stop the evaluation of the inactivated candidate handover cell 3 and its execution conditions, as indicated in the update. On the other hand, the UE may activate and proceed to evaluate the now-activated evaluation for candidate handover cell 2 based on its execution conditions.

As apparent from Fig. 18 and as discussed already above in connection with the first detailed implementation of Fig. 16, in case the execution condition for the CHO to cell 2 is satisfied, the UE proceeds to perform the handover execution, detaching from source cell 1 and attaching to handover target cell 2. It is assumed, that the CHO is RACH-based, i.e. that the UE performs a random-access procedure with the target cell. This facilitates achieving downlink synchronization and uplink synchronization before actually communicating with the target cell after detaching from the source cell.

### Third Solution

In the following an improved conditional handover procedure according to a Third Solution will be presented. In particular, implementing a RACH-less (conditional) handover would involve the disadvantage that all the conditional candidate cells (e.g. within the CHO configurations) need to reserve uplink resources for the UE to transmit its first uplink data after/during the handover. This would result in an inefficient utilization of radio resources. The Third Solution facilitates to overcome one or more of the above identified disadvantages of the prior art.

In the following, UEs, base stations (e.g. distributed unit and central unit thereof), integrated circuits and respective procedures to meet these needs will be described for the new radio access technology envisioned for the 5G mobile communication systems, but which may also be used in previous LTE-based mobile communication systems or future (e.g. 6G) mobile communication systems. In particular, while 3GPP is currently developing Rel. 18 and 19 of the 5G (-Advanced) mobile communication system, 3GPP has already started planning for the next generation, 6G, of communications systems.

Different implementations and variants of the improved conditional handover procedure will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to terminology used in the current 3GPP 5G standardization (possibly also used before in LTE/LTE-A systems), even though specific terminology to be used in the context of the new radio access technology for the next communication systems (e.g. 6G) may not be fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

The terms "**mobile station**", "**mobile node**" or "**user terminal**" or "**user equipment (UE)**", "**base station**", "**radio base station**" were already defined in connection with the above Second Solution, and need not be repeated here.

The term "**subset**" in connection with identifying a subset of candidate handover cells among the cells defined by the conditional handover configuration can be understood as comprising all or fewer cells than the one or more candidate handover cells of the conditional handover configuration. Furthermore, in one example, the candidate handover cells identified to be part of the subset can be considered to be more suitable for a conditional handover for the UE.

The expression "**a parameter of a random-access procedure**" can be broadly understood as a parameter that relates to the random-access procedure that may be performed by the UE with another potential handover target cell. In one example, the RACH-related parameter is the timing advance value which is usable by the UE to achieve uplink timing synchronization with a handover target cell. Another RACH-related parameter could be a random access preamble that can be used for performing the random-access procedure, thereby achieving a contention-free random-access procedure. In still another example, the RACH-related parameter could identify synchronization signals for achieving downlink synchronization with a handover target cell, e.g. a SSB/PBCH block.

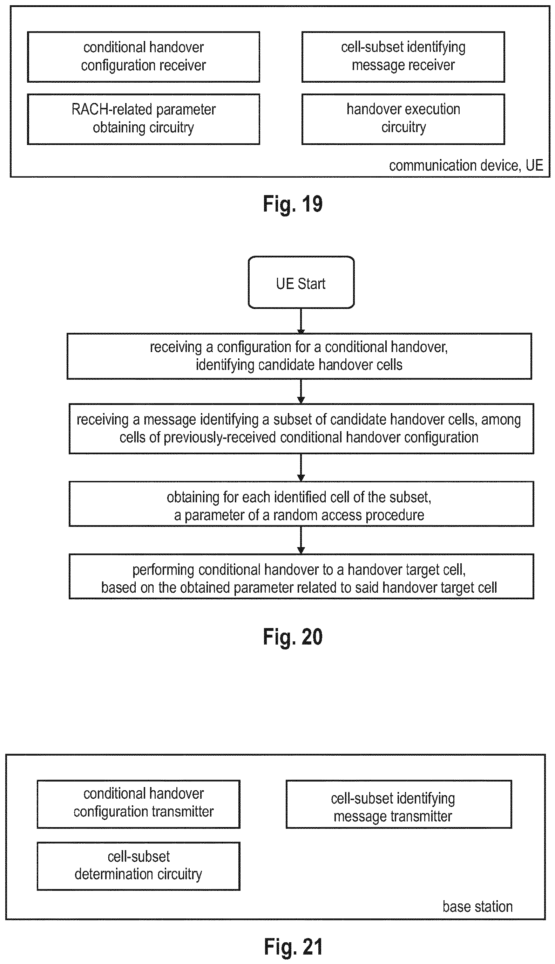

**Fig. 19** illustrates a simplified and exemplary UE structure according to a basic implementation of the improved conditional handover procedure of the Third Solution presented in more detail below. In one example, the UE structure can be implemented based on the general UE structure explained in connection with Fig. 10. The various structural elements of the UE illustrated in said Fig. 19 can be interconnected between one another e.g., with corresponding input/output nodes (not shown) e.g., in order to exchange control and user data and other signals. Although not shown for illustration purposes, the UE may include further structural elements.

As apparent from Fig. 19 the UE may include a conditional handover configuration receiver, a cell-subset identifying message receiver, a RACH-related parameter obtaining circuitry, and a handover execution circuitry.

The processing circuitry of the general UE structure of Fig. 10 can be implemented as the above RACH-related parameter obtaining circuitry and handover execution circuitry of Fig. 19, and can also perform further functions as will be become apparent from below. The transceiver of Fig. 10 can function as the above conditional handover configuration receiver and cell-subset identifying message receiver of Fig. 19, and can also perform further functions as will become apparent from below.

One exemplary procedure is implemented by a UE that includes the following. A receiver of the UE receives, from a base station, a configuration for a conditional handover, wherein the conditional handover configuration identifies one or more candidate handover cells. The receiver receives, from the base station, a message identifying a subset of candidate handover cells among the one or more candidate handover cells of the conditional handover configuration. Processing circuitry of the UE obtains, for each identified candidate handover cell of the subset, a parameter of a random access procedure that can be performed with said respective candidate handover cell. The processing circuitry performs the conditional handover to a handover target cell, being one of identified candidate handover cells of the subset, based on the obtained parameter relating to said handover target cell.

For instance, when the UE determines that the conditional handover is to be executed to a handover target cell of the subset, the UE performs the conditional handover based on the obtained parameter relating to said handover target cell. On the other hand, the UE may determine to perform a conditional handover to another cell outside of the subset, in which case the UE does not use the obtained parameter.

A corresponding exemplary method comprises the following steps performed by a UE:
receiving, from a base station, a configuration for a conditional handover, wherein the conditional handover configuration identifies one or more candidate handover cells,
receiving, from the base station, a message identifying a subset of candidate handover cells among the one or more candidate handover cells of the conditional handover configuration,
obtaining, for each identified candidate handover cell of the subset , a parameter of a random access procedure that can be performed with said respective candidate handover cell, and
performing the conditional handover to a handover target cell, being one of identified candidate handover cells of the subset, based on the obtained parameter relating to said handover target cell.

For instance, when the UE determines that the conditional handover is to be executed to a handover target cell of the subset, the UE performs the conditional handover based on the obtained parameter relating to said handover target cell. On the other hand, the UE may determine to perform a conditional handover to another cell outside of the subset, in which case the UE does not use the obtained parameter.A corresponding sequence diagram for an exemplary UE behaviour in line with the above-discussed UE and UE method is presented in **Fig. 20****.**

The above-described improved conditional handover procedure at the UE facilitates an efficient utilization of the radio resources. In particular, the Third Solution facilitates performing the improved handover execution (e.g. improved or no RACH procedure, as detailed later) for a smaller number of candidate handover cells rather than for the complete set of candidate handover cells off of ECHO configuration. Correspondingly, less radio resources may need to be reserved in the handover target cells for the improved handover execution. Furthermore, the improved handover execution according to the Third Solution may further reduce the synchronization overhead and reduce the overall synchronization time necessary at the time of executing the handover.

**Fig. 21** illustrates a simplified and exemplary base station structure according to an exemplary implementation of the improved conditional handover procedure of the Third Solution, which can be implemented based on the general base station structure explained in connection with Fig. 10. The various structural elements of the base station illustrated in said Fig. 21 can be interconnected between one another e.g., with corresponding input/output nodes (not shown) e.g., in order to exchange control and user data and other signals. Although not shown for illustration purposes, the base station may include further structural elements.

As apparent therefrom, the base station comprises a conditional handover configuration transmitter, a cell-subset identifying message transmitter, and a cell-subset determination circuitry.

The processing circuitry of the general base station structure of Fig. 10 can be implemented as the above cell-subset determination circuitry of Fig. 21, and can also perform further functions as will be become apparent from below. The transceiver of Fig. 10 can function as the above conditional handover configuration transmitter and cell-subset identifying message transmitter of Fig. 21, and can also perform further functions as will become apparent from below.

One exemplary procedure is implemented by a base station that includes the following. A transmitter of the base station transmits, to a user equipment, UE, a configuration for a conditional handover to be performed by the UE, wherein the conditional handover configuration identifies one or more candidate handover cells. Processing circuitry of the base station determines a subset of candidate handover cells among the one or more candidate handover cells of the conditional handover configuration. The transmitter transmits, to the UE, a message identifying the determined candidate handover cells of the subset.

A corresponding exemplary method comprises the following steps performed by a base station:
transmitting, to a user equipment, UE, a configuration for a conditional handover to be performed by the UE, wherein the conditional handover configuration identifies one or more candidate handover cells,
determining a subset of candidate handover cells among the one or more candidate handover cells of the conditional handover configuration, and
transmitting, to the UE, a message identifying the determined candidate handover cells of the subset.

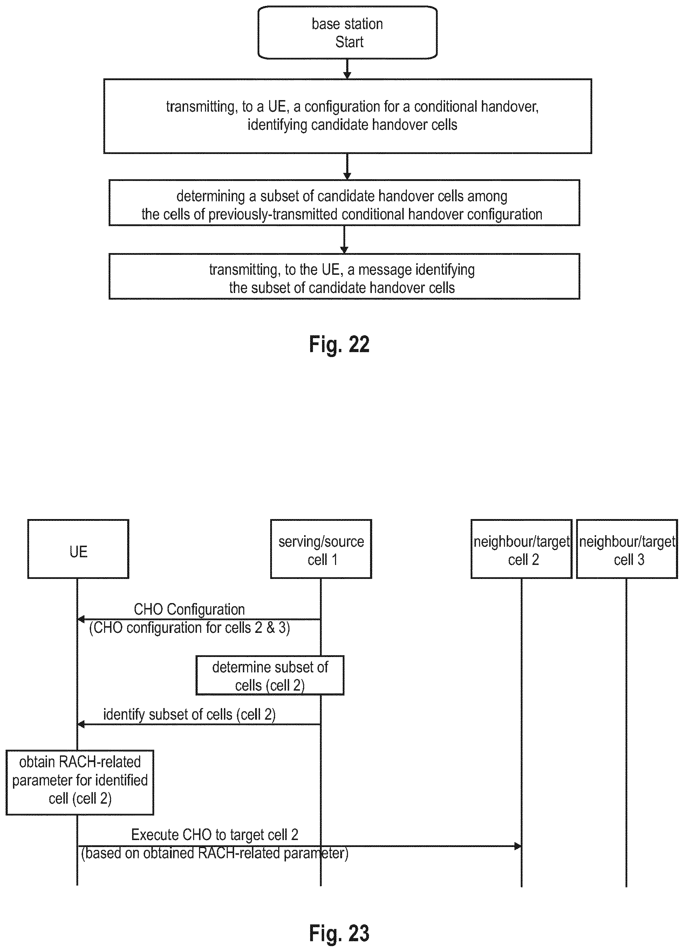

A corresponding sequence diagram for an exemplary base station behaviour in line with the above-discussed base station and base station method is presented in **Fig. 22****.**

**Fig. 23** is a signaling diagram of an exemplary and simplified implementation of the improved conditional handover procedure of the Third Solution, illustrating the exchange of messages between the different participating entities (here the UE and the gNBs) and the steps performed at these entities. The UE behaviour and gNB behaviour follow the above described UE and base station and the respective methods.

As apparent from Fig. 23, there is the source cell 1 to which the UE is currently attached, and further neighbour cells 2 and 3 that are the potential target cells for a conditional handover. The source gNB is responsible for preparing and transmitting the conditional handover configuration to the UE. The CHO configuration may refer to the candidate handover cells 2 and 3. Subsequently, the source gNB determines a subset of cells, in this example case only cell 2, and informs the UE about the identified subset of handover candidate cells.

In response to the identification of the subset of cells, the UE may obtain the RACH-related parameter for the identified cell of the subset, here for cell 2. Finally, the handover execution is performed between the UE and the handover target cell (here cell 2), based on the obtained RACH related parameter. Details on the improved handover execution will be presented below, according to different implementations and variations of the Third Solution.

Although not illustrated in Fig. 19-23, the improved conditional handover procedure according to the Third Solution may include further steps. For instance, the UE may perform evaluations of possible CHOs to candidate handover cells according to the previously received CHO configuration. In the example scenario of Fig. 23, the UE would thus evaluate execution conditions for the candidate handover cells 2 and 3. Furthermore, in this scenario of Fig. 23, it is exemplarily assumed that the UE determines that the execution conditions for handover candidate cell 2 are fulfilled, such that the UE proceeds to perform the improved handover execution based on the previously obtained RACH related parameter for cell 2. In one example, the execution conditions can be configured as part of the CHO configuration transmitted from the gNB to the UE at the beginning.

The different processes at the UE side and the base station have been explained with respect to above Fig. 19-23. More detailed and exemplary implementations of these processes of the improved conditional handover procedure according to the Third Solution will be explained in the following.

### <Conditional handover configuration>

As explained above with respect to Fig. 19-23, the UE receives from the base station a configuration for a conditional handover, which identifies one or more candidate handover cells. Exemplary implementations thereof will be explained in more detail below.

The conditional handover configuration is generated at the base station side, e.g. at a higher layer of the gNB, such as the RRC. Correspondingly, the thus generated initial CHO configuration can be transmitted from the gNB to the UE in a higher-layer message such as an RRC message. The conditional handover configuration identifies candidate handover cells to which a conditional handover can be performed by the UE, among a plurality of neighbouring cells of the UE. In one example, the gNB determines these candidate handover cells for the CHO configuration, which could be the best cells among all or some of the neighbouring cells of the UE and can be determined based e.g. on measurement results received from the UE and optionally based on further information available at the gNB such as information on network conditions at the corresponding neighboring cells of the UE.

### <Cell subset determination>

As explained above with respect to Fig. 19-23, the gNB determines a subset of handover candidate cells among those defined by the CHO configuration and informs the UE about the identified cells of the subset. Exemplary implementations thereof will be explained in more detail below.

The purpose of defining the subset of candidate handover cells is that an improved handover execution is to be performed by the UE for those identified cells of the subset (e.g. a RACH-less handover execution or a CFRA-based handover execution, as will be described later).

Furthermore, the gNB and UE also have to prepare the improved handover execution for those identified cells of the subset in advance of the improved handover execution (e.g. involving an early UL/DL synchronization with the identified cell of the subset), as will be described later. The improved CHO execution allows to reduce the time for DL/UL synchronization. On the other hand, the early synchronization with the target cell may require the target cell to reserve radio resources for the UE, in case the UE hands over to said target cell.

Consequently, applying the improved conditional handover procedure according to the present Third Solution on the one side allows to reduce the synchronization time when executing the handover but on the other side also requires the reservation of resources in advance in the selected handover candidate cells of the subset.

The gNB determines the candidate handover cells of the subset accordingly, and may balance the advantages and disadvantages as appropriate.

The gNB may select all or fewer cells than the candidate handover cells of the conditional handover configuration. Furthermore, in one example, the candidate handover cells identified to be part of the subset can be considered to be more or most suitable for a conditional handover for the UE. By reducing the number of candidate handover cells in the subset, compared to the complete number of candidate handover cells in the CHO configuration, the gNB facilitates reducing the impact of having radio resources reserved at potential target cells for a long time.

The selection of the candidate handover cells of the CHO configuration to be part of the subset can be based on information available at the gNB, such as measurement results received from the UE and/or information on network conditions of the candidate handover cells. For instance, the gNB might select only the best one or few candidate handover cells, in the sense that the subset includes the candidate handover cells most likely to be the target of the conditional handover by the UE, e.g. having the best radio conditions and optionally the best network conditions as well.

It should be further noted that changes in the radio conditions or network conditions may lead the gNB to perform a re-selection of the candidate handover cells to be included in the subset. Correspondingly, the gNB might provide an updated subset of handover candidate cells to the UE (not illustrated in Fig. 19-23).

In one example, the message identifying the subset of candidate handover cells could be a higher-layer message (e.g. layer 3, such as RRC) or a lower-layer message (e.g. layer 1 or 2, such as MAC CE or DCI). According to one example, the message identifying the subset of candidate handover cells could be the CHO configuration update message of the Second Solution (e.g. when considering a combination of the Third and Second Solutions).

### <Early synchronization - RACH-related parameter>

As explained above with respect to Fig. 19-23, the UE obtains a RACH-related parameter for each identified candidate handover cell of the subset. Exemplary implementations thereof will be explained in more detail below.

Obtaining the RACH-related parameter at the UE-side can be considered to be part of an early synchronization of the UE with the respective candidate handover cell of the subset. This early synchronization facilitates the improved execution of the conditional handover at a later point of time (e.g. when corresponding execution conditions of the CHO are fulfilled).

At least the following different implementations of the improved handover execution are possible according to the improved CHO procedure of the Third Solution.

In particular, according to a first variant, the Third Solution facilitates a RACH-less handover execution, i.e. the handover is executed between the UE and the handover target cell without performing a random access procedure.

According to a second variant, the Third Solution facilitates a handover execution with a contention-free-based random access procedure, i.e. although a random access procedure is performed during the handover execution, the random access procedure is performed contention-free (which has advantages compared to a contention-based random access procedure). Details on the contention-free RACH compared to a contention based RACH are presented in the above section "Random Access Procedure" and Fig. 7)

In either of the two variants, the handover execution for those candidate handover cells that are not identified in the subset is performed based on a contention-based random access procedure in a usual manner.

An exemplary implementation of the above first variant (RACH-less handover execution) will be presented in the following. In order to facilitate a RACH-less handover execution, an early downlink and uplink synchronization can be performed with each of the identified candidate handover cells of the subset. This involves that the UE obtains the timing advance (TA) value as the RACH-related parameter of the respective candidate handover cell, wherein the TA value can be used to facilitate uplink timing synchronization between the UE and the candidate handover cell. The TA value is typically obtained by the UE during the random access procedure. Thus, in case the TA value is obtained in advance during an early synchronization with a candidate handover cell, the actual handover execution to set the candidate handover cell at a later point of time might not require to perform a random access procedure to obtain the TA value again for said candidate handover cell.

There are different possibilities on how the UE may obtain the TA value for a candidate handover cell identified in the subset.

According to one possibility, the UE performs a random access procedure with the candidate handover cell at an early point of time, particularly before a conditional handover is executed. The random access procedure can be performed in the usual manner such that the UE obtains the TA value relating to said candidate handover cell in a message of the RACH (e.g. in msg3 for a 4-step RACH).

According to another possibility, the TA value may be transmitted to the UE from the serving base station (source gNB). The TA value can be transmitted to the UE e.g. using a lower-layer message. In one example, the UE starts the RACH procedure with the candidate handover cell by transmitting the preamble during the early synchronization. Then, the TA value is sent from the candidate cell to the source gNB, rather than to the UE.

According to still another possibility, the UE may compute the timing advance value based on a time advance value that is used by the UE for synchronization with its current source cell. For example, UE can measure the time difference in signals transmitted from the source cell and the target cell (e.g. matching reference signals transmitted from source cell and target cell) to be used and compensated along with the TA value of the source cell, as a derived form of TA value of the target cell. Also, it is exemplarily assumed that from network perspective, the source cell and all the neighboring cell functions are synchronized in time with each other, and hence, the time difference measurement approach is practical for the TA value computation at UE.

In one example, the gNB can configure the UE as to which of the above mechanisms should be used to obtain the TA value, e.g. as part of the CHO configuration or as part of the message identifying the subset of candidate handover cells.

Consequently, the UE may perform the RACH-less handover execution for a candidate handover cell identified as belonging to the subset and for which the UE successfully obtained in advance the timing advance value.

On the other hand, in case the timing advance value was not successfully obtained for a candidate handover cell of the subset before the corresponding conditional handover is triggered, the UE does not perform the RACH-less handover execution but rather can perform a (contention based) RACH-based handover execution which involves performing the random access procedure so as to obtain the timing advance value.

An exemplary implementation of the above second variant (contention-free-RACH-based handover execution) will be presented in the following. In order to facilitate a contention free RACH based handover execution, the UE can obtain a random access preamble as the RACH-related parameter of the respective candidate handover cell. This random access preamble can then be used by the UE at a later point of time when actually executing the handover to a candidate handover cell particularly for performing a contention free RACH procedure.

The random access preamble can be determined by the source gNB for each of the identified candidate handover cells of the subset and then transmitted to the UE. The source gNB may request a suitable random access preamble from each of the candidate handover cells of the subset. The gNB then provides the random-access preambles to the UE, e.g. in the message transmitted to the UE for identifying the candidate handover cells of the subset.

Consequently, the UE may perform the CFRA-based handover execution for a candidate handover cell identified as belonging to the subset and for which the UE received in advance the random access preamble.

On the other hand, in case the UE does not have the random-access preamble for a candidate handover cell of the subset before the corresponding conditional handover is triggered, the UE does not perform the CFRA-based handover execution but rather can perform a (contention based) RACH-based handover execution which involves performing the contention-based random access procedure as usual.

According to a further advantageous implementation of the second variant, the contention free random access procedure can be a 4-step random access procedure or a 2-step random access procedure (for details on 4-step and 2-step RACH see above section "Random Access Procedure" and Fig. 6 and 7). Performing a 2-step RACH is advantageous in that it reduces the overall synchronization time of the RACH and thus reduces the handover execution time.

According to a further implementation of the contention-free-RACH-based handover execution, the UE further obtains, in advance during the early synchronization procedure, a downlink synchronization signal index that facilitates obtaining the downlink timing synchronization between the UE and the identified candidate handover cell of the subset. For instance, the downlink synchronization signal index can be a SSB/PBCH index (Synchronization Signal Block / Physical Broadcast Channel). The Primary Synchronization Signal (PSS) and Secondary Synchronization Signal (SSS) of the SSB can be used by UEs to find, synchronize to and identify a network. The PBCH carries a minimum amount of system information including an indication where the remaining broadcast system information is transmitted. On the other hand, in the contention-based RACH procedure the UE typically performs a SSB block search over the search frequency raster of the target cell before achieving downlink synchronization. Therefore, by obtaining the DL synchronization signal index in advance of the handover execution, the later handover execution to a candidate handover cell can use the DL synchronization signal index and thus be even shorter. The handover execution time can thus be shortened even further.

The DL synchronization signal index can be determined by the source gNB for each of the identified candidate handover cells of the subset and then transmitted to the UE. The source gNB may request information on the DL synchronization signal index from each of the candidate handover cells of the subset. The gNB then provides the information on the downlink synchronization signaling next to the UE, e.g. in the message transmitted to the UE for identifying the candidate handover cells of the subset.

### <Handover execution>

As explained above with respect to Fig. 19-23, the UE performs the conditional handover to a handover target cell (one of the identified candidate handover cells of the subset), based on the obtained RACH-related parameter. Exemplary implementations thereof will be explained in more detail below.

As presented in the previous section, the Third Solution facilitates an improved handover execution between the UE and a handover target cell, by obtaining early a RACH-related parameter (as part of an early synchronization procedure). Correspondingly, the two variants of an improved handover execution have been described above and need not be repeated here.

In summary, the improved conditional handover procedure according to the Third Solution supports at least the following handover execution types:
- contention based RACH-(CBRA)-based handover execution,
- contention free RACH (CFRA)-based handover execution using the previously obtained random-access preamble, optionally further improved by using a previously obtained downlink synchronization signal index,
- RACH-less handover execution, using a previously obtained timing advance value.

In one example implementation, the RACH-less handover execution can be performed by the UE in case of performing the handover to a candidate handover cell of the subset and of having previously obtained the timing advance value for that candidate handover cell. Further, the CFRA-based handover execution can be performed by the UE in case of performing the handover to a candidate handover cell of the subset and of having previously obtained the random-access preamble for that candidate handover cell.

Otherwise, for a handover execution to a candidate handover cell that does not belong to the subset and for a handover execution to a candidate handover cell of the subset but for which no timing advance value and random-access preamble are available at the UE, the UE proceeds to perform the CBRA-based handover execution.

According to further exemplary implementations, the candidate cells to which a RACH-less handover execution is possible may reserve uplink resources usable by the UE, until the UE transmits its first uplink data using one of these reserve resources. For instance, the uplink resources could be reserved by one of the following methods:
- Configured grant (CG) based: the UL resources are configured using RRC messages.
- Dynamic Grant (DG) based: the UL resources are configured over the PDCCH (DCI messages)

According to the Third Solution, such uplink radio resources need to be reserved only for those candidate handover cells in the subset, and thus preferably for less candidate cells compared to all candidate handover cells of the CHO configuration. Thus, an efficient utilization of resources at the candidate handover cell is facilitated. Furthermore, since the selection of the candidate handover cell is continuously performed and adapted by the gNB, the resources likely need to be reserved for a relatively shorter duration of time.

In the above, an improved conditional handover procedure according to the Third Solution was presented, including different variants and implementations thereof. In the following, two different implementations will be presented in detail, based on some of the above described disclosure.

In these two detailed implementations, a split gNB architecture is assumed for the source gNB, where the UE is currently attached to cell 1 under control of one gNB-DU. There is a further gNB-DU controlling another cell 2, and the gNB-CU. In addition, a further cell 3 is assumed, controlled by another different gNB 2. It is assumed here with that the selection of the subset of candidate handover cells is performed at the lower layer of the gNB, here implemented at the gNB-DU.

### <First detailed implementation>

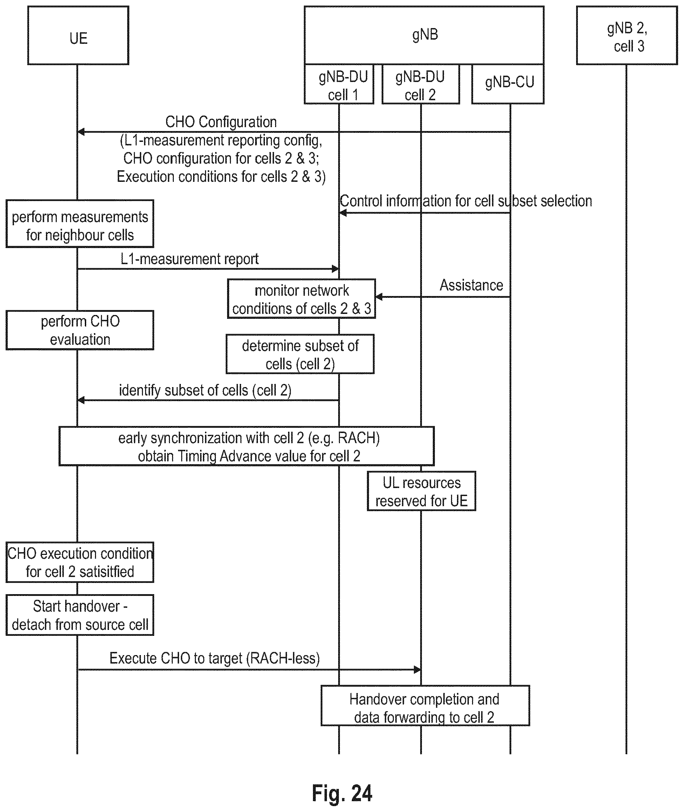

The exemplary first detailed implementation will be explained together with **Fig. 24****,** which is a signaling diagram, illustrating the exchange of messages between the different participating entities (here the UE and the gNBs) and the steps performed at these entities.

For the first detailed implementation it is assumed that the UE is able to perform a RACH-less handover execution to a handover target cell.

As apparent from Fig. 24, the gNB-CU generates the CHO configuration and transmits same to the UE. It is exemplarily assumed that the CHO configuration identifies the candidate handover cells 2 and 3 and corresponding execution conditions for the cells. Correspondingly, the UE, upon receiving the CHO configuration, may start performing the evaluations of the execution conditions for the candidate cells 2 & 3.

As apparent from Fig. 24, the gNB-CU may configure L1-measurement reporting for the UE, to assist the gNB-DU to monitor the channel/radio conditions for the selection of the subset of candidate handover cells. The L1-measurement reporting configuration is transmitted by the gNB-CU to the UE, here exemplarily as part of the CHO configuration. The UE performs the measurements of the neighbouring cells and transmits results of these measurements to the gNB-DU in a L1-measurement report.

In this example, the gNB-CU also sends control information to the gNB-DU so as to facilitate the selection of the subset of candidate handover cells at the gNB-DU. The control information sent to the gNB-DU may comprise e.g. the conditional candidate cell configurations. Exemplarily, the control information transmitted to the gNB-DU may also include the L1-measurement reporting configuration, such that the gNB-DU is aware which measurement reporting it can expect from the UE.

Based on the control information, the gNB-DU can proceed to collect the information on the radio measurements and network conditions for the candidate handover cells as defined in the CHO configuration. The gNB-CU may assist the source gNB-DU in obtaining the information on the network conditions, particularly regarding the candidate handover cells 2 and 3, which are not under control of the source gNB-DU. In particular, while network conditions for cells under control of the source gNB-DU (i.e. intra-DU candidate handover cell) would be directly available at the source gNB-DU, this is not the case for candidate handover cells under control of another gNB-DU or another gNB(-CU) (i.e. inter-DU candidate handover cells and inter-CU candidate handover cells). The assistance by the gNB-CU could be autonomously performed or may occur when requested by the gNB-DU.

Based on the measurement results and/or the network conditions, the gNB-DU may determine a subset of candidate handover cells, here cell 2, for benefiting from the improved handover execution. From the L1-measurement results and/or network conditions, the gNB-DU could estimate the probability for each candidate handover cell as to whether the execution conditions are fulfilled and thus select the subset of most-likely candidate handover cells. For example, cell 2 is determined by the gNB-DU as being that cell that is most likely to be the target of the conditional handover.

Ideally, the subset of candidate handover cells should be less than the complete number of candidate handover cells of the CHO configuration, such that an efficient utilization of radio resource reservation is facilitated. However, the subset could also be same number of candidate handover cells of the CHO configuration, which may have the benefit that the resources could be reserved for a shorter duration of time.

The gNB-DU informs the UE on the identified candidate handover cells of the subset, e.g. using a lower layer message, such as a MAC CE or a DCI message.

The UE could then start the early DL and UL synchronization for the selected candidate handover cell 2. In the present example, this could involve performing a (contention-based) random-access procedure with cell 2, thereby obtaining the Timing Advance for cell 2. The timing advance value for cell 2 is thus already obtained in advance before the execution conditions for cell 2 are satisfied.

Once the execution condition for the CHO to cell 2 is satisfied, the UE determines that cell 2 is one of the candidate handover cells of the subset and further determines that a timing advance value is available for cell 2. Correspondingly, the UE can perform the improved handover execution, i.e. the RACH-less handover execution to cell 2. The UE thus detaches from source cell 1 and attaches to handover target cell 2 by transmitting the first data in the uplink using the reserved resources.

According to a further example, further to the implementation of RACH-less handover execution, UE determines that the handover towards the target cell is completed when receiving the first (any) downlink message with C-RNTI identified to this UE, sent from the target cell or the newly attached cell (for example, a PDCCH with DL grant or UL grant to resume user data services).

### <Second detailed implementation>

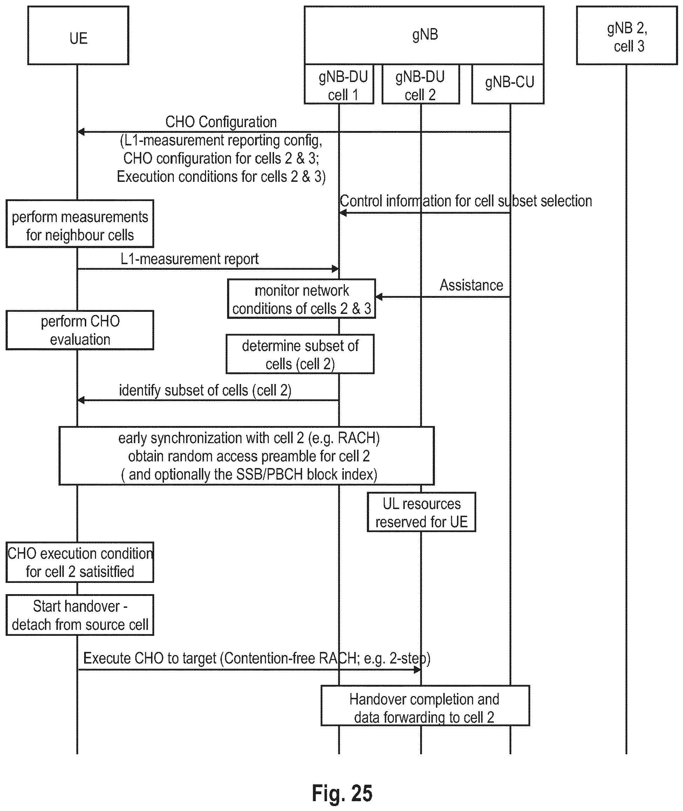

The exemplary second detailed implementation will be explained together with **Fig. 25****,** which is a signaling diagram, illustrating the exchange of messages between the different participating entities (here the UE and the gNBs) and the steps performed at these entities.

The second detailed implementation differs from the first detailed implementation in that the UE is enabled to perform a contention-free-RACH-based handover execution to a handover target cell, rather than a RACH-less handover execution as in the first detailed implementation.

As apparent from Fig. 25 and as discussed already above in connection with the first detailed implementation of Fig. 24,
- the gNB-CU generates the CHO configuration and transmits same to the UE, allowing the UE to start evaluating the CHO to the candidate handover cells,
- the gNB-CU may configure L1-measurement reporting for the UE, to assist the gNB-DU to monitor the channel/radio conditions for the selection of the subset of candidate handover cells,
- the gNB-CU also sends control information to the gNB-DU so as to facilitate the selection of the subset of candidate handover cells at the gNB-DU,
- the gNB-DU collects the information on the radio measurements and network conditions for the candidate handover cells as defined in the CHO configuration,
- the gNB-DU may determine a subset of candidate handover cells, here cell 2, based on the measurement results and/or the network conditions, and informs the UE about the selected subset.

The UE could then start the early DL and UL synchronization for the selected candidate handover cell 2. In the present example, this could involve obtaining a RACH preamble, and optionally the SSB/PBCH block index, from the source gNB-DU regarding the candidate handover cell 2.

Once the execution condition for the CHO to cell 2 is satisfied, the UE determines that cell 2 is one of the candidate handover cells of the subset and further determines that a random access preamble is available for cell 2. Correspondingly, the UE can perform the improved handover execution, i.e. the CFRA-based handover execution to cell 2. The UE thus detaches from source cell 1 and attaches to handover target cell 2 by transmitting the first data in the uplink using the reserved resources.

### Fourth Solution

In the following an improved conditional handover procedure according to a Fourth Solution will be presented. The Fourth Solution is based on a combination of the above discussed Second Solution and Third Solution. The improved conditional handover procedure of the Fourth Solution can thus obtain the benefits from both the Second and Third Solutions.

In particular, the Initial CHO configuration generated by the higher-layer of the source gNB in the Second Solution corresponds to the CHO configuration generated by the source gNB of the Third Solution.

The CHO configuration update procedure of the Second Solution and the cell subset selection and early synchronization of the Third Solution can be performed by the gNB(-DU) continuously and in parallel for the Fourth Solution.

In one example implementation of the combined Fourth Solution, the selection of the subset of candidate cells by the gNB(-DU) according to the Third Solution can be performed among the activated candidate handover cells of the initial CHO configuration of the Second Solution (rather than among all the candidate cells of the CHO configuration).

Alternatively, the selection of the subset of candidate cells by the gNB(-DU) according to the Third Solution can be performed among all the candidate handover cells of the initial CHO configuration of the Second Solution. In case the gNB-DU selects an inactive candidate handover cell to be in the subset, the gNB-DU can further decide to activate said candidate handover cell either before or at a same time.

In a further example, the activated candidate cells as controlled according to the Second Solution can be the considered as (taken as) the selected subset of candidate cells of the Third Solution, or vice versa. In that case, for instance, the separate selection of the subset of candidate cells of the Third Solution is not necessary, but already implemented by the CHO configuration update procedure according to the Second Solution. This would facilitate the operation at the UE and the gNB, because similar or same processes need not be performed twice.

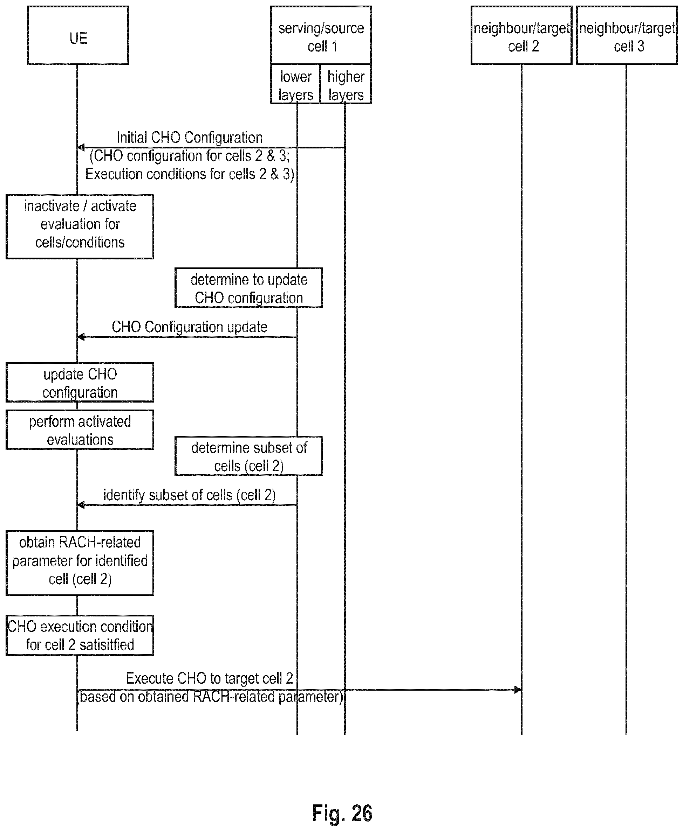

An exemplary implementation of the Fourth Solution is presented in the following, with reference to **Fig. 26****,** which is a signaling diagram of an exemplary and simplified implementation of the improved conditional handover procedure of the Fourth Solution, illustrating the exchange of messages between the different participating entities (here the UE and the gNBs) and the steps performed at these entities according to the Second and Third Solutions presented above.

In particular, the source gNB is illustrated so as to differentiate between lower layers of the gNB and higher layers of the gNB. In line with the description of the improved conditional handover procedure above, the higher layers (e.g. the RRC) of the source cell (source base station) are responsible for preparing and transmitting the initial conditional handover configuration to the UE; the transmission may correspondingly be using a higher-layer message.

The UE, then, inactivates or activates the evaluation of the conditional handover, via the execution conditions and/or the candidate handover cells, in response to the initial conditional handover configuration.

The UE can start to perform the evaluations of conditional handovers that have been determined as active already after receiving the initial conditional handover. For instance, the evaluation process can be performed continuously at the UE side, for any active evaluation.

As further illustrated in Fig. 26, the lower layers at the gNB determine to update the conditional handover configuration and transmit a corresponding conditional handover configuration update to the UE; the transmission may correspondingly be using a lower-layer message. The received update message triggers the UE to update the conditional handover configuration accordingly.

The lower layer of the source gNB determines a subset of cells, in this example case only cell 2, and informs the UE about the identified subset of handover candidate cells. In response to the identification of the subset of cells, the UE may obtain the RACH-related parameter for the identified cell of the subset, here for cell 2. Finally, the handover execution is performed between the UE and the handover target cell (here cell 2), based on the obtained RACH related parameter.

### Further Variants, including Hardware and Software Implementation of the present disclosure

In the following, variants of the present disclosure will be described.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Further Aspects

According to a first aspect, a UE is provided that includes the following. A receiver of the UE receives from a base station, an initial configuration for a conditional handover in a higher-layer message, wherein the initial conditional handover configuration identifies one or more candidate handover cells and one or more execution conditions for executing the conditional handover. Processing circuitry of the UE inactivates or activates evaluation of conditional handover execution conditions for candidate handover cells, in response to the received initial conditional handover configuration. The processing circuitry performs, for each activated evaluation, the evaluation of the one or more conditional handover execution conditions as to whether to perform the conditional handover towards one of the candidate handover cells. The receiver receives, from the base station, a conditional handover configuration update in a lower-layer message, wherein the conditional handover configuration update instructs the UE to update the conditional handover configuration.

According to a second aspect provided in addition to the first aspect, the inactivating or activating of the evaluation comprises one or both of:
- inactivating or activating a candidate handover cell, and
- inactivating or activation a conditional handover execution condition.

In an optional implementation, the inactivating or activating of the evaluation is based on information comprised in the initial conditional handover configuration.

According to a third aspect provided in addition to the first or second aspect, the updating of the conditional handover configuration, instructed by the conditional handover configuration update, comprises one or more of the following:
- activating an evaluation,
- activating an inactive candidate handover cell,
- activating an inactive conditional handover execution condition,
- deactivating an evaluation,
- deactivating an active candidate handover cell,
- deactivating an active conditional handover execution condition, and
- adapting a parameter of an active conditional handover execution condition to adapt a priority of performing a conditional handover based on said adapted conditional handover execution condition, optionally wherein the parameter is a measurement offset parameter.

In an optional implementation, the conditional handover configuration update is received in
- one message, usable for instructing the activation, and inactivation and adaptation, or
- more than one message, with each message being usable for instructing the activation, or inactivation or adaption.

According to a fourth aspect, provided in addition to any one of the first to third aspects, the processing circuitry inactivates all the evaluations configured by the initial conditional handover configuration; optionally, the processing circuitry, in operation, does not perform any inactivated evaluation in response to the initial conditional handover configuration. The conditional handover configuration update instructs the UE to update the initial conditional handover configuration by activating one or more evaluations; optionally, the processing circuitry performs the evaluation as activated by the conditional handover configuration update.

According to a fifth aspect, provided in addition to any one of the first to third aspects, the processing circuitry activates all the evaluations configured by the initial conditional handover configuration; optionally, the processing circuitry perform all activated evaluations in response to the initial conditional handover configuration. The conditional handover configuration update instructs the UE to update the initial conditional handover configuration by deactivating one or more evaluations; optionally the processing circuitry does not perform the evaluations as inactivated by the conditional handover configuration update.

According to a sixth aspect, provided in addition to any one of the first to fifth aspects, the processing circuitry performs measurements on neighbouring cells, including one or more of the candidate handover cells configured by the initial conditional handover configuration. The transmitter transmits results of the measurements to the base station in a lower-layer message.

In an optional implementation, the initial conditional handover configuration comprises a measurement reporting configuration, configuring the UE to report results of the measurements to the base station using lower-layer messages. Optionally, the measurements are one or more of radio measurements, distance-based measurements and time-based measurements.

According to a seventh aspect, provided in addition to any one of the first to sixth aspects, the receiver receives a further conditional handover configuration update in a higher-layer message. The further conditional handover configuration update instructs the UE to update the conditional handover configuration. In an optional implementation, the processing circuitry performs the update of the conditional handover configuration according to the received conditional handover configuration update.

According to an eighth aspect, provided in addition to any one of the first to seventh aspects, the processing circuitry processes at a lower layer the conditional handover configuration update to determine how to update the conditional handover configuration.

According to a ninth aspect, provided in addition to any one of the first to eighth aspects, the conditional handover configuration update comprises one or more of:
- identification information for identifying a candidate handover cell from the initial conditional handover configuration,
- identification information for identifying a conditional handover execution condition from the initial conditional handover configuration,
- a parameter of a conditional handover execution condition, optionally wherein the parameter is a measurement offset parameter, and
- activation / deactivation information.

According to a tenth aspect, provided in addition to any one of the first to ninth aspects, in case the processing circuitry evaluates that one or more conditional handover execution conditions are fulfilled for one candidate handover cell, the processing circuitry performs the conditional handover towards said one candidate handover cell as a handover target cell.

In an optional implementation, the performing of the conditional handover towards the handover target cell comprises performing a random access procedure between the UE and the handover target cell.

According to an eleventh aspect, provided in addition to any one of the first to tenth aspects, a higher layer is a Radio Resource Control, RRC, layer, optionally implemented in a central unit of the base station. A lower layer is a Medium Access Control, MAC, layer or a Physical, PHY, layer, optionally implemented in a distributed unit of the base station.

According to a twelfth aspect, a base station is provided comprising the following. Processing circuitry of the base station generates, at a higher layer, an initial configuration for a conditional handover to be performed by a user equipment, UE, wherein the initial conditional handover configuration identifies one or more candidate handover cells and one or more execution conditions for executing the conditional handover. A transmitter of the base station transmits the generated initial conditional handover configuration to the UE, in a higher-layer message. The processing circuitry determines, at a lower layer, to update the initial conditional handover configuration. The transmitter transmits, to the UE, a conditional handover configuration update in a lower-layer message, wherein the conditional handover configuration update instructs the UE to update the conditional handover configuration.

According to a thirteenth aspect, provided in addition to the twelfth aspect, the processing circuitry determines, at a higher layer, whether to inactivate or activate evaluation of conditional handover execution conditions for the candidate handover cells to be performed by the UE. The generating of the initial conditional handover configuration is based on the determination of whether to inactivate or activate evaluation.

In an optional implementation, the processing circuitry determines, at a higher layer, among a plurality of neighbouring cells of the UE, the one or more candidate handover cells to be available for the conditional handover of the UE and to be included in the initial conditional handover configuration.

In an optional implementation, the inactivating or activating of the evaluation comprises one or both of:
- inactivating or activating a candidate handover cell, and
- inactivating or activation a conditional handover execution condition.

Optionally, information on the initial conditional handover configuration is provided from the higher layer to the lower-layer of the base station.

According to a fourteenth aspect, provided in addition to the twelfth or thirteenth aspect, the updating of the conditional handover configuration, instructed by the conditional handover configuration update, comprises one or more of the following:
- activating an evaluation,
- activating an inactive candidate handover cell,
- activating an inactive conditional handover execution condition,
- deactivating an evaluation,
- deactivating an active candidate handover cell,
- deactivating an active conditional handover execution condition, and
- adapting a parameter of an active conditional handover execution condition to adapt a priority of performing a conditional handover based on said adapted conditional handover execution condition, optionally wherein the parameter is a measurement offset parameter.

According to a fifteenth aspect, provided in addition to any one of the twelfth to fourteenth aspects, the determining of the conditional handover configuration update at the lower layer is based on one or more of:
- information on network conditions for the one or more candidate handover cells of the conditional handover configuration, and
- results of measurements, received from the UE in a lower-layer message, performed by the UE on neighbouring cells, including one or more of the candidate handover cells configured by the conditional handover configuration.

In an optional implementation, information on the network conditions for a candidate handover cell under control of the lower-layer of the base station is determined by the lower-layer of the base station. In an optional implementation, information on the network conditions for a candidate handover cell under control of another lower-layer entity of the base station is obtained from the higher-layer of the base station. In an optional implementation, information on network conditions for a candidate handover cell under control of another base station is obtained from the higher-layer of the base station. In an optional implementation, the initial conditional handover configuration is generated by the processing circuitry to include a measurement reporting configuration, configuring the UE to report results of the measurements to the base station using lower-layer messages.

According to a sixteenth aspect, a method is provided comprising the following steps performed by a user equipment:
receiving from a base station, an initial configuration for a conditional handover in a higher-layer message, wherein the initial conditional handover configuration identifies one or more candidate handover cells and one or more execution conditions for executing the conditional handover,
inactivating or activating evaluation of conditional handover execution conditions for candidate handover cells, in response to the received initial conditional handover configuration,
performing, for each activated evaluation, the evaluation of the one or more conditional handover execution conditions as to whether to perform the conditional handover towards one of the candidate handover cells, and
receiving, from the base station, a conditional handover configuration update in a lower-layer message, wherein the conditional handover configuration update instructs the UE to update the conditional handover configuration.

According to a seventeenth aspect, a method is provided comprising the following steps performed by a base station:
generating, at a higher layer, an initial configuration for a conditional handover to be performed by a user equipment, UE, wherein the initial conditional handover configuration identifies one or more candidate handover cells and one or more execution conditions for executing the conditional handover,
transmitting the generated initial conditional handover configuration to the UE, in a higher-layer message,
determining, at a lower layer, to update the initial conditional handover configuration, and transmitting, to the UE, a conditional handover configuration update in a lower-layer message, wherein the conditional handover configuration update instructs the UE to update the conditional handover configuration.

According to an eighteenth aspect, and integrated circuit is provided, which, in operation, controls a process of a user equipment, UE, the process comprising the following steps performed by the UE:
receiving from a base station, an initial configuration for a conditional handover in a higher-layer message, wherein the initial conditional handover configuration identifies one or more candidate handover cells and one or more execution conditions for executing the conditional handover,
inactivating or activating evaluation of conditional handover execution conditions for candidate handover cells, in response to the received initial conditional handover configuration,
performing, for each activated evaluation, the evaluation of the one or more conditional handover execution conditions as to whether to perform the conditional handover towards one of the candidate handover cells, and
receiving, from the base station, a conditional handover configuration update in a lower-layer message, wherein the conditional handover configuration update instructs the UE to update the conditional handover configuration.

According to a nineteenth aspect, and integrated circuit is provided, which, in operation, controls a process of a base station, the process comprising the following steps performed by the base station:
generating, at a higher layer, an initial configuration for a conditional handover to be performed by a user equipment, UE, wherein the initial conditional handover configuration identifies one or more candidate handover cells and one or more execution conditions for executing the conditional handover,
transmitting the generated initial conditional handover configuration to the UE, in a higher-layer message,
determining, at a lower layer, to update the initial conditional handover configuration, and
transmitting, to the UE, a conditional handover configuration update in a lower-layer message, wherein the conditional handover configuration update instructs the UE to update the conditional handover configuration.

According to a 20^{th} aspect, a user equipment is provided comprising the following. A receiver of the UE receives, from a base station, a configuration for a conditional handover, wherein the conditional handover configuration identifies one or more candidate handover cells. The receiver receives, from the base station, a message identifying a subset of candidate handover cells among the one or more candidate handover cells of the conditional handover configuration. Processing circuitry of the UE obtains, for each identified candidate handover cell of the subset, a parameter of a random access procedure that can be performed with said respective candidate handover cell. The processing circuitry performs the conditional handover to a handover target cell, being one of identified candidate handover cells of the subset, based on the obtained parameter relating to said handover target cell.

According to a 21^{st} aspect, provided in addition to the 20^{th} aspect, the processing circuitry obtains a timing advance value as the parameter of the random access procedure. The timing advance value is usable for facilitating uplink timing synchronization between the UE and the handover target cell. The conditional handover with the identified candidate handover cell of the subset is performed without performing a random access procedure with the handover target cell.

In an optional implementation, the timing advance value relating to an identified candidate handover cell of the subset is obtained by one of:
- performing a random access procedure with said identified candidate handover cell of the subset,
- receiving a message from the base station, including the timing advance value, and
- computing the timing advance value by the UE, based on a timing advance value used by the UE for being synchronized with the base station.

Optionally, the parameter is obtained before executing the conditional handover to the candidate handover cell.

According to a 22^{nd} aspect, provided in addition to the 20^{th} or 21^{st} aspect, the processing circuitry obtains a random access preamble as the parameter of the random access procedure. The conditional handover is performed such that it includes performing a contention free random access procedure using the obtained random access preamble. Optionally, the contention free random access procedure is a 4-step random access procedure or a 2-step random access procedure.

According to a 23^{rd} aspect, provided in addition to the 22^{nd} aspect, the processing circuitry obtains a downlink synchronization signal index usable for facilitating downlink timing synchronization between the UE and the identified candidate handover cell of the subset. The conditional handover is performed such that it includes performing the contention free random access procedure using the obtained downlink synchronization signal index.

According to a 24^{th} aspect, provided in addition to any one of the 20^{th} to 23^{rd} aspects, the processing circuitry performs the conditional handover to a handover target cell, not being one of the identified candidate handover cells of the subset, such that it includes performing a contention-based random access procedure with the handover target cell. In an optional implementation, the subset comprises the same or fewer candidate handover cells than the one or more candidate handover cells of the conditional handover configuration. In an optional implementation, the subset comprises candidate handover cells identified by the base station to be more suitable for a conditional handover for the UE.

According to an 25^{th} aspect, a base station is provided comprising the following. A transmitter of the base station transmits, to a user equipment, UE, a configuration for a conditional handover to be performed by the UE, wherein the conditional handover configuration identifies one or more candidate handover cells. Processing circuitry of the base station determines a subset of candidate handover cells among the one or more candidate handover cells of the conditional handover configuration. The transmitter transmits, to the UE, a message identifying the determined candidate handover cells of the subset.

According to a 26^{th} aspect, provided in addition to the 25^{th} aspect, the processing circuitry determines a random access preamble for each of the identified candidate handover cells of the subset, and the transmitter transmits the random access preamble for each of the identified candidate handover cells of the subset to the UE.

In an optional implementation, the processing circuitry determines, for each of the identified candidate handover cells of the subset, a downlink synchronization signal index usable for facilitating downlink timing synchronization between the UE and the candidate handover cell, and the transmitter transmits the downlink synchronization signal index for each of the identified candidate handover cells of the subset to the UE.

According to a 27^{th} aspect, a method is provided comprising the following steps performed by a user equipment, UE:
receiving, from a base station, a configuration for a conditional handover, wherein the conditional handover configuration identifies one or more candidate handover cells,
receiving, from the base station, a message identifying a subset of candidate handover cells among the one or more candidate handover cells of the conditional handover configuration,
obtaining, for each identified candidate handover cell of the subset , a parameter of a random access procedure that can be performed with said respective candidate handover cell, and
performing the conditional handover to a handover target cell, being one of identified candidate handover cells of the subset, based on the obtained parameter relating to said handover target cell.

According to a 28^{th} aspect, a method is provided comprising the following steps performed by a base station:
transmitting, to a user equipment, UE, a configuration for a conditional handover to be performed by the UE, wherein the conditional handover configuration identifies one or more candidate handover cells,
determining a subset of candidate handover cells among the one or more candidate handover cells of the conditional handover configuration, and
transmitting, to the UE, a message identifying the determined candidate handover cells of the subset.

According to a 29^{th} aspect, an integrated circuit is provided, which, in operation, controls a process of a user equipment, UE, the process comprising the following steps performed by the UE:
receiving, from a base station, a configuration for a conditional handover, wherein the conditional handover configuration identifies one or more candidate handover cells,
receiving, from the base station, a message identifying a subset of candidate handover cells among the one or more candidate handover cells of the conditional handover configuration,
obtaining, for each identified candidate handover cell of the subset , a parameter of a random access procedure that can be performed with said respective candidate handover cell, and
performing the conditional handover to a handover target cell, being one of identified candidate handover cells of the subset, based on the obtained parameter relating to said handover target cell.

According to a 30^{th} aspect, an integrated circuit is provided, which, in operation, controls a process of a base station, the process comprising the following steps performed by the base station:
transmitting, to a user equipment, UE, a configuration for a conditional handover to be performed by the UE, wherein the conditional handover configuration identifies one or more candidate handover cells,
determining a subset of candidate handover cells among the one or more candidate handover cells of the conditional handover configuration, and
transmitting, to the UE, a message identifying the determined candidate handover cells of the subset.

## Claims

1. A user equipment, UE, comprising:
a receiver, which in operation, receives from a base station, an initial configuration for a conditional handover in a higher-layer message, wherein the initial conditional handover configuration identifies one or more candidate handover cells and one or more execution conditions for executing the conditional handover,
processing circuitry, which in operation, inactivates or activates evaluation of conditional handover execution conditions for candidate handover cells, in response to the received initial conditional handover configuration,
the processing circuitry, which in operation, performs, for each activated evaluation, the evaluation of the one or more conditional handover execution conditions as to whether to perform the conditional handover towards one of the candidate handover cells, and
the receiver, which in operation, receives, from the base station, a conditional handover configuration update in a lower-layer message, wherein the conditional handover configuration update instructs the UE to update the conditional handover configuration.

2. The UE according to claim 1, wherein the inactivating or activating of the evaluation comprises one or both of:
- inactivating or activating a candidate handover cell, and
- inactivating or activation a conditional handover execution condition,
optionally wherein the inactivating or activating of the evaluation is based on information comprised in the initial conditional handover configuration.

3. The UE according to claim 1 or 2, wherein the updating of the conditional handover configuration, instructed by the conditional handover configuration update, comprises one or more of the following:
- activating an evaluation,
- activating an inactive candidate handover cell,
- activating an inactive conditional handover execution condition,
- deactivating an evaluation,
- deactivating an active candidate handover cell,
- deactivating an active conditional handover execution condition, and
- adapting a parameter of an active conditional handover execution condition to adapt a priority of performing a conditional handover based on said adapted conditional handover execution condition, optionally wherein the parameter is a measurement offset parameter,
optionally wherein the conditional handover configuration update is received in
- one message, usable for instructing the activation, and inactivation and adaptation, or
- more than one message, with each message being usable for instructing the activation, or inactivation or adaption.

4. The UE according to any one of claims 1 to 3, wherein the processing circuitry, in operation, inactivates all the evaluations configured by the initial conditional handover configuration, optionally wherein the processing circuitry, in operation, does not perform any inactivated evaluation in response to the initial conditional handover configuration,
wherein the conditional handover configuration update instructs the UE to update the initial conditional handover configuration by activating one or more evaluations, optionally wherein the processing circuitry, in operation, performs the evaluation as activated by the conditional handover configuration update.

5. The UE according to any one of claims 1 to 4, wherein the processing circuitry, in operation, performs measurements on neighbouring cells, including one or more of the candidate handover cells configured by the initial conditional handover configuration,
wherein the transmitter, in operation, transmits results of the measurements to the base station in a lower-layer message,
optionally wherein the initial conditional handover configuration comprises a measurement reporting configuration, configuring the UE to report results of the measurements to the base station using lower-layer messages,
optionally wherein the measurements are one or more of radio measurements, distance-based measurements and time-based measurements.

6. A base station comprising:
processing circuitry, which in operation, generates, at a higher layer, an initial configuration for a conditional handover to be performed by a user equipment, UE, wherein the initial conditional handover configuration identifies one or more candidate handover cells and one or more execution conditions for executing the conditional handover,
a transmitter, which in operation, transmits the generated initial conditional handover configuration to the UE, in a higher-layer message,
the processing circuitry, which in operation, determines, at a lower layer, to update the initial conditional handover configuration, and
the transmitter, which in operation, transmits, to the UE, a conditional handover configuration update in a lower-layer message, wherein the conditional handover configuration update instructs the UE to update the conditional handover configuration.

7. The base station according to claim 6, wherein the processing circuitry, in operation, determines, at a higher layer, whether to inactivate or activate evaluation of conditional handover execution conditions for the candidate handover cells to be performed by the UE, and
wherein the generating of the initial conditional handover configuration is based on the determination of whether to inactivate or activate evaluation,
optionally wherein the processing circuitry, in operation, determines, at a higher layer, among a plurality of neighbouring cells of the UE, the one or more candidate handover cells to be available for the conditional handover of the UE and to be included in the initial conditional handover configuration,
optionally wherein the inactivating or activating of the evaluation comprises one or both of:
- inactivating or activating a candidate handover cell, and
- inactivating or activation a conditional handover execution condition, and
optionally wherein information on the initial conditional handover configuration is provided from the higher layer to the lower-layer of the base station.

8. The base station according to claim 6 or 7, wherein the updating of the conditional handover configuration, instructed by the conditional handover configuration update, comprises one or more of the following:
- activating an evaluation,
- activating an inactive candidate handover cell,
- activating an inactive conditional handover execution condition,
- deactivating an evaluation,
- deactivating an active candidate handover cell,
- deactivating an active conditional handover execution condition, and
- adapting a parameter of an active conditional handover execution condition to adapt a priority of performing a conditional handover based on said adapted conditional handover execution condition, optionally wherein the parameter is a measurement offset parameter.

9. The base station according to any one of claims 6 to 8, wherein the determining of the conditional handover configuration update at the lower layer is based on one or more of:
- information on network conditions for the one or more candidate handover cells of the conditional handover configuration, and
- results of measurements, received from the UE in a lower-layer message, performed by the UE on neighbouring cells, including one or more of the candidate handover cells configured by the conditional handover configuration,
optionally wherein information on the network conditions for a candidate handover cell under control of the lower-layer of the base station is determined by the lower-layer of the base station,
optionally wherein information on the network conditions for a candidate handover cell under control of another lower-layer entity of the base station is obtained from the higher-layer of the base station,
optionally wherein information on network conditions for a candidate handover cell under control of another base station is obtained from the higher-layer of the base station,
optionally wherein the initial conditional handover configuration is generated by the processing circuitry to include a measurement reporting configuration, configuring the UE to report results of the measurements to the base station using lower-layer messages.

10. A user equipment, UE, comprising:
a receiver, which in operation, receives, from a base station, a configuration for a conditional handover, wherein the conditional handover configuration identifies one or more candidate handover cells,
the receiver, which in operation, receives, from the base station, a message identifying a subset of candidate handover cells among the one or more candidate handover cells of the conditional handover configuration,
processing circuitry, which in operation, obtains, for each identified candidate handover cell of the subset, a parameter of a random access procedure that can be performed with said respective candidate handover cell, and
the processing circuitry, which in operation, performs the conditional handover to a handover target cell, being one of identified candidate handover cells of the subset, based on the obtained parameter relating to said handover target cell.

11. The UE according to claim 10, wherein the processing circuitry, in operation, obtains a timing advance value as the parameter of the random access procedure, wherein the timing advance value is usable for facilitating uplink timing synchronization between the UE and the handover target cell,
wherein the conditional handover with the identified candidate handover cell of the subset is performed without performing a random access procedure with the handover target cell,
optionally wherein the timing advance value relating to an identified candidate handover cell of the subset is obtained by one of:
- performing a random access procedure with said identified candidate handover cell of the subset,
- receiving a message from the base station, including the timing advance value, and
- computing the timing advance value by the UE, based on a timing advance value used by the UE for being synchronized with the base station, and
optionally wherein the parameter is obtained before executing the conditional handover to the candidate handover cell.

12. The UE according to claim 10 or 11, wherein the processing circuitry, in operation, obtains a random access preamble as the parameter of the random access procedure,
wherein the conditional handover is performed such that it includes performing a contention free random access procedure using the obtained random access preamble,
optionally wherein the contention free random access procedure is a 4-step random access procedure or a 2-step random access procedure.

13. The UE according to claim 12, wherein the processing circuitry, in operation, obtains a downlink synchronization signal index usable for facilitating downlink timing synchronization between the UE and the identified candidate handover cell of the subset,
wherein the conditional handover is performed such that it includes performing the contention free random access procedure using the obtained downlink synchronization signal index.

14. A base station comprising:
a transmitter, which in operation, transmits, to a user equipment, UE, a configuration for a conditional handover to be performed by the UE, wherein the conditional handover configuration identifies one or more candidate handover cells,
processing circuitry, which in operation, determines a subset of candidate handover cells among the one or more candidate handover cells of the conditional handover configuration, and
the transmitter, which in operation, transmits, to the UE, a message identifying the determined candidate handover cells of the subset.

15. The base station according to claim 14, wherein the processing circuitry, in operation, determines a random access preamble for each of the identified candidate handover cells of the subset, and the transmitter, in operation, transmits the random access preamble for each of the identified candidate handover cells of the subset to the UE, and
optionally wherein the processing circuitry, in operation, determines, for each of the identified candidate handover cells of the subset, a downlink synchronization signal index usable for facilitating downlink timing synchronization between the UE and the candidate handover cell, and the transmitter, in operation, transmits the downlink synchronization signal index for each of the identified candidate handover cells of the subset to the UE.
